(19) Europäisches Patentamt
European Patent Office
Office européen des brevets

(11) **EP 4 491 646 A1**

(12) **EUROPEAN PATENT APPLICATION**
published in accordance with Art. 153(4) EPC

(43) Date of publication:
**15.01.2025 Bulletin 2025/03**

(21) Application number: 23766871.0

(22) Date of filing: **08.03.2023**

(51) International Patent Classification (IPC):
*C08F 259/04* (2006.01)   *C08F 2/44* (2006.01)
*C09D 11/00* (2014.01)   *C09D 151/00* (2006.01)

(52) Cooperative Patent Classification (CPC):
**C08F 2/44; C08F 259/04; C09D 11/00;**
**C09D 151/00**

(86) International application number:
**PCT/JP2023/008718**

(87) International publication number:
**WO 2023/171695 (14.09.2023 Gazette 2023/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.03.2022 JP 2022034898**

(71) Applicant: **Kaneka Corporation**
**Osaka-shi, Osaka 530-8288 (JP)**

(72) Inventors:
• **SONODA, Takeshi**
**Takasago-shi, Hyogo 676-8688 (JP)**
• **KOBAYASHI, Yukiko**
**Takasago-shi, Hyogo 676-8688 (JP)**

(74) Representative: **Vossius & Partner**
**Patentanwälte Rechtsanwälte mbB**
**Siebertstrasse 3**
**81675 München (DE)**

(54) **METHOD FOR PRODUCING COMPOSITE RESIN PARTICLES, COMPOSITE RESIN PARTICLES, MOLDED BODY USING COMPOSITE RESIN PARTICLES, INK AND COATING MATERIAL**

(57) It is an object of the present invention to provide vinyl chloride-based composite resin particles which can improve impact resistance, plasticity, film forming properties, water resistance, adhesion, and the like. It is also an object of the present invention to provide vinyl chloride-based composite resin particles whose latex has excellent storage stability and provides a coating film having a low water absorption. The objects are attained by a method for producing composite resin particles in which method, in multistage emulsion polymerization, a monomer(s) mainly constituted by a vinyl chloride monomer is/are polymerized in the first stage [step 1], a monomer(s) mainly constituted by an acrylic monomer is/are polymerized in the second stage [step 2], and a redox polymerization initiator containing a polymerization initiator and a reducing agent is used in the [step 2].

EP 4 491 646 A1

## Description

Technical Field

The present invention relates to a method for producing vinyl chloride-based composite resin particles which are used for a hard molded product, a soft molded product, a paint, an ink, and the like. The present invention also relates to vinyl chloride-based composite resin particles and products thereof.

Background Art

A vinyl chloride-based resin is excellent in chemical resistance, water resistance, weather resistance, flame retardancy, processability, coloring, and the like. Therefore, the vinyl chloride-based resin is used in various applications.
The vinyl chloride-based resin is used as a molded product, for example, by powdering the vinyl chloride-based resin, which is obtained by polymerization, and then heating and molding the powdered vinyl chloride-based resin. The molded product of the vinyl chloride resin includes a hard molded product in which a plasticizer is not used and a soft molded product in which a plasticizer is used. The hard molded product has a problem that impact resistance is relatively low, because a plasticizer is not used. Therefore, as a method for enhancing the impact resistance, a method is suggested in which, in multistage emulsion polymerization, an acrylic monomer is polymerized in the first stage and then vinyl chloride is polymerized in the second stage (Patent Literature 1).
However, in this production method, obtained resin particles are each likely to have a core/shell structure in which the boundary between an acrylic resin and a vinyl chloride resin in a particle is clear. Moreover, in order to obtain a transparent molded product, it is necessary to decrease a particle diameter. Therefore, the resin particles obtained by this production method are limited in terms of applications.
On the other hand, the soft molded product has a problem of a deterioration of performance and a problem of tackiness caused by bleeding of the plasticizer. There are also applications in which it is desired to use a reduced amount of the plasticizer or not to use the plasticizer, because of concern of the plasticizer itself over health and the like. As a solution for realizing a reduction in amount of the plasticizer used or for realizing non-use of the plasticizer, for example, there is a method in which a vinyl chloride monomer and an acrylic macro monomer that has a low glass transition temperature are copolymerized (Patent Literature 2). However, in this method, production by an emulsion polymerization method is difficult because the macro monomer is highly hydrophobic and is not dissolved in water. As a result, in this method, it is difficult to obtain resin particles having a nano-size particle diameter.
As another application, the vinyl chloride-based resin may also be used as a binder for coating, such as a paint and an ink, by dissolving the powdered vinyl chloride-based resin in a solvent or by using, as it is, a latex prepared by the emulsion polymerization method.
In coating applications, the vinyl chloride-based resin has a disadvantage that a film forming temperature is high and the plasticity of an obtained coating is poor, because the glass transition temperature of the vinyl chloride resin alone is high. As a solution for the disadvantage, it is has been disclosed from long time ago that an acrylic monomer, a vinyl acetate-based monomer, or the like is copolymerized with a vinyl chloride monomer (Patent Literatures 3 and 4). However, this method has a problem that a homopolymer of the vinyl chloride monomer and a homopolymer of a monomer to be copolymerized therewith are formed or the scale of the interior of a polymerization reactor is increased, because the rate of polymerization reaction of the vinyl chloride monomer differs from that of the monomer to be copolymerized therewith.
Further, for the purpose of enhancing water resistance, adhesion, and the like when the vinyl chloride-based resin is used as a paint, an ink, or the like, a core/shell resin which is obtained by, in multistage emulsion polymerization, polymerizing a vinyl chloride monomer and an acrylic monomer at a weight ratio of 90:10 to 50:50 in the first stage (core) and then polymerizing the vinyl chloride monomer and the acrylic monomer at a weight ratio of 0:100 to 40:60 in the second stage (shell) is suggested (Patent Literature 5). However, also in this method, copolymerization of the vinyl chloride monomer and the acrylic monomer is essential, and formation of homopolymers due to a difference in rate of polymerization reaction and an increase in scale of the polymerization are concerned. Furthermore, in a case where the core/shell resin has a structure in which a core part and a shell part are clearly separated, an acrylic resin component mainly constitutes surface parts of particles which surface parts affect the physical properties of a coating film, and the characteristics of the vinyl chloride resin are unlikely to be exhibited.
Moreover, as a latex for a paint, a latex of a core/shell resin in which a vinyl chloride resin is a core and an acrylic resin is a shell is suggested (Patent Literature 6 and Non-Patent Literature 1).

Citation List

[Patent Literatures]

[Patent Literature 1]
Japanese Patent Application Publication Tokukai No. 2020-70350
[Patent Literature 2]
Japanese Patent Application Publication Tokukai No. 2005-206815
[Patent Literature 3]
Japanese Patent Application Publication Tokukaishou No. 49-112990
[Patent Literature 4]
Japanese Patent Application Publication Tokukaishou No. 51-74081
[Patent Literature 5]
Japanese Patent Application Publication Tokukaihei No. 9-12656
[Patent Literature 6]
Specification of Chinese Patent Application Publication No. 112409543

[Non-patent Literature]

[Non-patent Literature 1]
CHINA COATINGS, Vol. 36. No, 09, September 2021, p. 51-68

Summary of Invention

Technical Problem

It is an object of the present invention to provide vinyl chloride-based composite resin particles which can improve impact resistance, plasticity, film forming properties, water resistance, adhesion, and the like.

Further, the above conventional latex of the core/shell resin in which the vinyl chloride resin is a core and the acrylic resin is a shell has room for improvement in terms of storage stability and a water absorption of a coating film. It is another object of the present invention to provide vinyl chloride-based composite resin particles whose latex has excellent storage stability and provides a coating film having a low water absorption.

Solution to Problem

The inventor of the present invention found it possible for composite resin particles to improve impact resistance, plasticity, film forming properties, water resistance, adhesion, and the like, which is an object of a vinyl chloride resin, the composite resin particles being obtained by, in multistage emulsion polymerization, (i) polymerizing a monomer(s) mainly constituted by a vinyl chloride monomer in the first stage (hereinafter, referred to as [step 1]) and (ii) polymerizing a monomer(s) mainly constituted by an acrylic monomer in the second and subsequent stages (hereinafter, referred to as [step 2]). Furthermore, the inventor of the present invention found it possible to improve the storage stability of a latex of the composite resin particles to be obtained and decrease the water absorption of a coating film by using, in the [step 2], a redox polymerization initiator containing a polymerization initiator and a reducing agent. That is, a method for producing composite resin particles in accordance with an embodiment of the present invention includes the following configuration.

<1> A method for producing composite resin particles, including the following steps 1 and 2, wherein, in the step 2, a redox polymerization initiator containing a polymerization initiator and a reducing agent is used:

[step 1]
a step of obtaining (A) a vinyl chloride-based resin by carrying out emulsion polymerization of a monomer mixture constituted by more than 90 parts by weight and not more than 100 parts by weight of (a1) a vinyl chloride monomer and not less than 0 parts by weight and less than 10 parts by weight of (a2) an ethylenically unsaturated monomer that is copolymerizable with the vinyl chloride monomer [wherein a total amount of (a1) and (a2) is 100 parts by weight]; and

[step 2]
a step of obtaining (B) an acrylic resin by carrying out, in the presence of the (A) vinyl chloride-based resin, emulsion polymerization of a monomer mixture constituted by 50 parts by weight to 100 parts by weight of (b1) a (meth)acrylic acid alkyl ester monomer and 0 parts by weight to 50 parts by weight of (b2) an ethylenically unsaturated monomer that is copolymerizable with (meth)acrylic acid alkyl ester [wherein a total amount of (b1) and (b2) is 100 parts by weight].

As supplemental remarks, each of the above [step 1] and [step 2] may be carried out at one time or may be alternatively carried out over a plurality of times. In the latter case, the composition of a corresponding one of the monomer mixtures is changed and each of the above [step 1] and [step 2] is carried out over a plurality of times.

Advantageous Effects of Invention

According to an embodiment of the present invention, it is possible to obtain a hard molded product whose impact resistance is improved, a soft molded product in which a reduced amount of a plasticizer is used or no plasticizer is used, and a coating material, such as a paint and an ink, whose film forming properties, plasticity, water resistance, and adhesion are improved.
Moreover, according to an embodiment of the present invention, it is possible to provide vinyl chloride-based composite resin particles whose latex has excellent storage stability and provides a coating film having a low water absorption.

Description of Embodiments

The following description will discuss, in detail, the present invention on the basis of embodiments of the present invention.
In an embodiment of the present invention, composite resin particles in which (B) an acrylic resin is composited with (A) vinyl chloride-based resin particles are obtained by, in multistage emulsion polymerization, (i) as the first stage (hereinafter, referred to as "step 1"), obtaining (A) a vinyl chloride-based resin by polymerizing a monomer mixture constituted by more than 90 parts by weight and not more than 100 parts by weight of (a1) a vinyl chloride monomer and not less than 0 parts by weight and less than 10 parts by weight of (a2) an ethylenically unsaturated monomer that is copolymerizable with the vinyl chloride monomer [wherein a total amount of (a1) and (a2) is 100 parts by weight] and (ii) as the second stage (hereinafter, referred to as [step 2]), polymerizing, in the presence of the (A) vinyl chloride-based resin, a monomer mixture constituted by 50 parts by weight to 100 parts by weight of (b1) a (meth)acrylic acid alkyl ester monomer and 0 parts by weight to 50 parts by weight of (b2) an ethylenically unsaturated monomer that is copolymerizable with the (b1) (meth)acrylic acid alkyl ester [wherein a total amount of (b1) and (b2) is 100 parts by weight].
The mechanism thereof is considered to be as follows. That is, the monomer(s) for forming the (B) acrylic resin penetrate(s) the (A) vinyl chloride-based resin particles obtained in the [step 1]. The monomer(s) is/are then polymerized in the particles. As a result, the (A) vinyl chloride-based resin and the (B) acrylic resin are present in an entangled state, without having a clear core/shell structure, in the particles. As a result, it is possible to obtain composite resin particles having properties differing from those in the conventional technique.
Note, here, that the expression "more than 90 parts by weight and not more than 100 parts by weight" mans "greater than 90 parts by weight and 100 parts by weight or smaller". Note also that the expression "50 parts by weight to 100 parts by weight" means "not less than 50 parts by weight and not more than 100 parts by weight". (Numerical ranges in the specification and the claims below are interpreted in the same way as these expressions. That is, any numerical range expressed as "A to B" means "not less than A (inclusive of A and greater than A) and not more than B (inclusive of B and smaller than B)", unless otherwise stated.

(A) Vinyl chloride-based resin

In an embodiment of the present invention, the (A) vinyl chloride-based resin is obtained by polymerizing or copolymerizing, by emulsion polymerization, the monomer mixture constituted by more than 90 parts by weight and not more than 100 parts by weight of the (a1) vinyl chloride monomer and not less than 0 parts by weight and less than 10 parts by weight of the (a2) ethylenically unsaturated monomer that is copolymerizable with the vinyl chloride monomer [a total of the (a1) and the (a2) is 100 parts by weight]. This polymerization is carried out as the first stage of the multistage emulsion polymerization.
Note that the [step 1] may be carried out at one time or may be alternatively carried out over a plurality of times. In the latter case, the composition of the monomer mixture is changed and the [step 1] is carried out over a plurality of times.
In an embodiment of the present invention, functions are imparted mainly by the (B) acrylic resin obtained in the [step 2] in the multistage emulsion polymerization. Therefore, the composition of the (A) vinyl chloride-based resin in the [step 1] may be relatively simple, and the (a1) vinyl chloride monomer may be used alone. However, copolymerization with another monomer is not denied. As necessary, the (a1) vinyl chloride monomer can be used in combination with the (a2) ethylenically unsaturated monomer that is copolymerizable with the vinyl chloride monomer. The (a2) is used in an amount of preferably not less than 0 parts by weight and less than 10 parts by weight, and more preferably 0 parts by weight to 5 parts by weight.

In an embodiment of the present invention, the (a2) ethylenically unsaturated monomer that is used in the [step 1] and that is copolymerizable with the vinyl chloride monomer is not particularly limited, and examples thereof include all known monomers that are copolymerizable with vinyl chloride, the known monomers including: olefins such as ethylene, propylene, and butene; vinyl esters such as vinyl acetate, vinyl versatate, vinyl propionate, and vinyl stearate; vinyl ethers such as methyl vinyl ether, ethyl vinyl ether, octyl vinyl ether, and lauryl vinyl ether; vinylidenes such as vinylidene chloride; unsaturated carboxylic acids and acid anhydrides thereof such as acrylic acid, methacrylic acid, fumaric acid, maleic acid, itaconic acid, maleic anhydride, and itaconic anhydride; unsaturated carboxylic acid esters such as methyl (meth)acrylate, ethyl (meth)acrylate, monomethyl maleate, dimethyl maleate, and butyl benzyl maleate; aromatic vinyl compounds such as styrene, α-methylstyrene, and divinylbenzene; and unsaturated nitriles such as acrylonitrile. One of these (a2) ethylenically unsaturated monomers that are copolymerizable with the vinyl chloride monomer may be used solely. Alternatively, two or more may be used in combination.

In the [step 1], (E) a compound having at least two non-conjugated double bonds can also be used in combination, for the purpose of (i) crosslinking of the (A) vinyl chloride-based resin and (ii) introduction of a grafting point with the (B) acrylic resin in the [step 2]. The (E) compound having at least two non-conjugated double bonds that is used in the [step 1] in an embodiment of the present invention is not particularly limited, and examples thereof include allyl methacrylate, allyl acrylate, triallyl cyanurate, triallyl isocyanurate, diallyl fumarate, diallyl maleate, diallyl phthalate, triallyl trimellitate, trimethylolpropane diallyl ether, divinyl adipate, divinylbenzene, ethylene glycol dimethacrylate, propylene glycol dimethacrylate, 1,3-butylene dimethacrylate, monoethylene glycol dimethacrylate, diethylene glycol dimethacrylate, triethylene glycol dimethacrylate, trimethylolpropane trimethacrylate, polyethylene glycol dimethacrylate, dipropylene glycol dimethacrylate, polypropylene glycol diacrylate, polyethyleneglycol diacrylate, and bisphenol-modified polyethyleneglycol diacrylate.

In particular, for the purpose of the introduction of the grafting point with the (B) acrylic resin in the [step 2], the (E) compound having at least two non-conjugated double bonds is preferably a compound having two or more allyl groups, and particularly preferably triallyl cyanurate (hereinafter may be abbreviated to [TAC]), triallyl isocyanurate, or triallyl trimellitate, each of which has three allyl groups.

One of the above (E) compounds having at least two non-conjugated double bonds may be used solely. Alternatively, two or more may be used in combination.

The (E) compound having at least two non-conjugated double bonds is used in an amount of preferably not more than 5 parts by weight, more preferably not more than 1 part by weight, and even more preferably not more than 0.3 parts by weight, with respect to the total amount, which is regarded as 100 parts by weight, of the (a1) vinyl monomer and the (a2) ethylenically unsaturated monomer that is copolymerizable with the vinyl chloride monomer. It is preferable that the (E) be used in an amount of not more than 5 parts by weight, because the degree of crosslinking of the (A) vinyl chloride-based resin does not become excessively high and, accordingly, penetration of the acrylic monomer to be polymerized in the [step 2] is not prevented and compositing in the particles progresses successfully.

In an embodiment of the present invention, when the emulsion polymerization is carried out in the [step 1], an ionic or nonionic surfactant which is generally used in an emulsion polymerization method can be used.

Examples of the ionic surfactant used in the [step 1] include: anionic surfactants having a polyoxyalkylene chain, such as polyoxyethylene nonylphenyl ether sulfate, polyoxyethylene allyl ether sulfate, octylphenoxy ethoxyethyl sulfonate, polyoxyethylene tridecyl ether sulfate, and polyoxyethylene polycyclic phenyl ether sulfate; sulfonates such as sodium lauryl sulfonate, sodium dodecylbenzene sulfonate, and sodium isooctylbenzene sulfonate; ammonium salts such as imidazoline laurate and ammonium hydroxide; and sulfosuccinic acid-based surfactants such as sodium dilauryl sulfosuccinate.

Examples of the nonionic surfactant used in the [step 1] include polyoxyalkylenes such as polyoxyethylene dodecyl ether, polyoxyethylene nonylphenyl ether, polyoxyethylene lauryl ether, and polyoxyethylene polyoxypropylene lauryl ether.

One of these surfactants used in the [step 1] may be used solely. Alternatively, two or more may be used in combination. The surfactant in the [step 1] is used in an amount of preferably not more than 10 parts by weight, and more preferably 0.5 parts by weight to 8 parts by weight, with respect to the total amount, which is regarded as 100 parts by weight, of the monomer mixture of the (A).

In an embodiment of the present invention, (C) a reactive surfactant having a polymerizable double bond in one molecule is preferably used as a part or all of the surfactant used in the [step 1], in terms of suppression of generation of new particles during the emulsion polymerization and the water resistance (in particular, decrease in water absorption, decrease in water whitening, and the like), weather resistance, and glossiness of a coating film to be obtained. In particular, by using a reactive surfactant having a polyoxyalkylene group in a molecule, it is possible to enhance the mechanical stability and storage stability of a composite resin particle latex to be obtained.

Examples of the (C) reactive surfactant having a polymerizable double bond in one molecule used in the [step 1] include: ADEKAREASOAP (registered trademark) ER-10, ER-20, ER-30, ER-40, SR-05, SR-10, SR-20, SR-1025, SR-2025, SR-3025, NE-10, NE-20, NE-30, NE-40, and SE-10N manufactured by ADEKA CORPORATION; Antox (registered trademark) MS-60, RMA-1120, RMA-564, RMA-568, and RMA-506 manufactured by Nippon Nyukazai Co., Ltd.; Aqualon (registered trademark) KH-05, KH-10, RN-20, RN-30, RN-50, RN-2025, HS-10, HS-20, HS-1025, BC05, BC10, BC0515, BC1025, AR-10, AR-20, AR-1025, AR-2020, AN-10, AN-20, AN-30, and AN-5065 manufactured by DKS Co. Ltd.; ELEMINOL (registered trademark) JS-2, JS-20, RS-30, and RS-3000 manufactured by Sanyo Chemical Industries, Ltd., and LATEMUL (registered trademark) S-180, S-180A, PD-104, PD-105, PD-420, PD-430, PD-430S, and PD-450 manufactured by Kao Corporation.

In an embodiment of the present invention, examples of a polymerization initiator used in the [step 1] include organic peroxides, azo-based initiators, peroxodisulfates (also referred to as "persulfates"), and hydrogen peroxide solutions. Examples of the organic peroxides include t-butyl hydroperoxide, cumene hydroperoxide, t-butyl peroxy isopropylcarbonate, paramenthane hydroperoxide, 1,1,3,3-tetramethylbutyl hydroperoxide, benzoyl peroxide, and lauroyl peroxide. Examples of the azo-based initiators include 2,2'-azobisisobutyronitrile, 2,2'-azobis(2,4-dimethylvaleronitrile), and 2,2'-azobis(4-methoxy-2,4-dimethylvaleronitrile). Examples of the peroxodisulfates include ammonium persulfate, potassium persulfate, and sodium persulfate. One of these polymerization initiators may be used solely. Alternatively, two or more may be used in combination.

The polymerization initiator in the [step 1] is used in an amount of preferably 0.01 parts by weight to 5 parts by weight, and more preferably 0.02 parts by weight to 3 parts by weight, with respect to the total amount, which is regarded as 100 parts by weight, of the monomer mixture of the (a1) and the (a2). In a case where the amount of the polymerization initiator used is not less than 0.01 parts by weight, the polymerization progresses suitably. In a case where the amount of the polymerization initiator used is not more than 5 parts by weight, it is possible to suitably control generation of heat. Note, here, that, in a case where a reducing agent described below is used in combination with the polymerization initiator or a case where the reducing agent and an oxidation-reduction catalyst are used in combination with the polymerization initiator, the amount of the polymerization initiator used does not include the amount(s) of the reducing agent used and the oxidation-reduction catalyst used.

In an embodiment of the present invention, the polymerization initiator used in the [step 1] can be used, as necessary, as a redox polymerization initiator in which the polymerization initiator is used in combination with the reducing agent such as sodium sulfite, sodium thiosulfate, sodium hydroxymethanesulfinate, ascorbic acid, sodium ascorbate, Rongalite, Bruggolite (registered trademark) FF-6, and thiourea dioxide. Note that, in terms of environmental considerations, the reducing agent is particularly preferably Bruggolite (registered trademark) FF-6 and thiourea dioxide, each of which does not generate formaldehyde. One of these reducing agents may be used solely. Alternatively, two or more may be used in combination. By using the redox polymerization initiator, it is possible to keep a polymerization temperature low, and possible to suppress pyrolysis of a vinyl chloride component.

In a case where the reducing agent is used as the redox polymerization initiator, the reducing agent is used in an amount of preferably 0.5 times to 10 times, and more preferably 0.6 times to 7 times the weight of the polymerization initiator combined as the redox polymerization initiator. It is preferable that the reducing agent be used in an amount falling within the above range, because a stable polymerization behavior is exhibited.

Note that an organic peroxide is preferably used as the redox polymerization initiator in which the organic peroxide is used in combination with the reducing agent, particularly from the viewpoint of polymerization stability and water resistance. Furthermore, the redox polymerization initiator in which the organic peroxide is used in combination with the reducing agent may be used in combination with the oxidation-reduction catalyst described below.

The oxidation-reduction catalyst may be used in combination with the redox polymerization initiator. In other words, the redox polymerization initiator may be used in the presence of the oxidation-reduction catalyst. As the oxidation-reduction catalyst, for example, a transition metal complex generated by using a transition metal salt and a chelating agent in combination can be used. Examples of the transition metal salt include ferrous(II) sulfate, copper(II) sulfate, and copper chloride. Examples of the chelating agent include disodium ethylenediaminetetraacetate (EDTA·2Na), tartaric acid, and ammonia. In a case where ferrous(II) sulfate is used as the transition metal salt and disodium ethylenediaminetetraacetate (hereinafter may be referred to as "EDTA·2Na" in this specification) is used as the chelating agent, Fe-EDTA is generated and functions as the oxidation-reduction catalyst.

In a case where the oxidation-reduction catalyst is used in combination with the redox polymerization initiator, the transition metal salt in the oxidation-reduction catalyst is used in an amount of preferably 0.001 times to 0.05 times, and more preferably 0.002 times to 0.03 times the weight of the reducing agent used. The chelating agent in the oxidation-reduction catalyst is used in an amount of desirably 1 time to 10 times the weight of the transition metal salt. It is preferable that the amounts of the reducing agent used and the oxidation-reduction catalyst used fall within the above respective ranges, because a stable polymerization behavior is exhibited. Note that the organic peroxide and the reducing agent in the redox polymerization initiator are consumed in the process of the step 1, but the oxidation-reduction catalyst remains in a system also after the process of the step 1.

(B) Acrylic resin

In an embodiment of the present invention, the (B) acrylic resin is obtained by, as the [step 2], polymerizing the acrylic monomer mixture in the presence of the (A) vinyl chloride-based resin prepared in the [step 1]. The (B) acrylic resin imparts various functions by being composited with the vinyl chloride-based resin. The mechanism thereof is considered to be as follows. That is, the monomer(s) for forming the (A) acrylic resin penetrate(s) the vinyl chloride-based resin particles present in the system, and is/are then polymerized in the particles. As a result, the (A) vinyl chloride-based resin and the (B) acrylic resin are present in an entangled state in the particles.

In an embodiment of the present invention, there is a possibility that the location of the (B) acrylic resin in the composite resin particles can be arbitrarily adjusted, by adjusting the composition of the monomer(s) for forming the (B) acrylic resin so that balance between hydrophilicity and hydrophobicity is changed. That is, in a case where the composition is employed with which the (B) acrylic resin is more hydrophobic than the (A) vinyl chloride-based resin, it is considered possible to cause a large amount of the (B) acrylic resin to be present more internally in the composite resin particles. In contrast, in a case where the composition is employed with which the (B) acrylic resin is more hydrophilic than the (A) vinyl chloride-based resin, it is considered possible to cause a large amount of the (B) acrylic resin to be present more externally in the particles. In a case where the (B) acrylic resin is caused to have hydrophilicity or hydrophobicity comparable to that of the (A) vinyl chloride-based resin, it is considered that the (B) acrylic resin is present almost uniformly.

Note that the [step 2] may be carried out at one time or may be alternatively carried out over a plurality of times. In the latter case, the composition of the monomer mixture is changed and the [step 2] is carried out over a plurality of times.

In an embodiment of the present invention, the polymerization composition of the (B) acrylic resin in the [step 2] is as follows: 50 parts by weight to 100 parts by weight of the (b1) (meth)acrylic acid alkyl ester monomer and 0 parts by weight to 50 parts by weight of the (b2) ethylenically unsaturated monomer that is copolymerizable with the (meth)acrylic acid alkyl ester [wherein the total amount of the (b1) and the (b2) is 100 parts by weight].

In an embodiment of the present invention, specific examples of the (b1) (meth)acrylic acid alkyl ester monomer used in the [step 2] include methyl (meth)acrylate, ethyl (meth)acrylate, iso-propyl (meth)acrylate, n-butyl (meth)acrylate, iso-butyl (meth)acrylate, tert-butyl (meth)acrylate, cyclohexyl (meth)acrylate, 2-ethylhexyl (meth)acrylate, isodecyl (meth)acrylate, lauryl (meth)acrylate, tridecyl (meth)acrylate, and stearyl (meth)acrylate. One of these (b1) (meth)acrylic acid alkyl esters may be used solely. Alternatively, two or more may be used in combination.

In an embodiment of the present invention, the (b2) ethylenically unsaturated monomer that is copolymerizable with the (meth)acrylic acid alkyl ester that is used in the [step 2] is not particularly limited, provided that the (b2) ethylenically unsaturated monomer is copolymerizable with the (b1) (meth)acrylic acid alkyl ester. Specific examples of the (b2) include: aromatic hydrocarbon-based vinyl monomers such as styrene, $\alpha$-methylstyrene, chlorostyrene, 4-hydroxystyrene, and vinyltoluene; vinyl esters such as vinyl acetate, vinyl propionate, and vinyl versatate; allyl compounds; nitrile group-containing vinyl-based monomers such as (meth)acrylonitrile; compounds such as AS-6, AN-6, AA-6, AB-6, and AK-5, each of which is a macro monomer manufactured by TOAGOSEI CO., LTD.; and vinyl methyl ether, propylene, butadiene, vinyl chloride, and vinylidene chloride. One of these (b2) ethylenically unsaturated monomers that are copolymerizable with the (meth)acrylic acid alkyl ester may be used solely. Alternatively, two or more may be used in combination.

Further, in an embodiment of the present invention, a vinyl-based monomer having an acid group can also be used as the (b2) used in the [step 2]. By having an acid group such as a carboxyl group or a sulfonic acid group, it is possible to enhance the mechanical stability and chemical stability of the composite resin particle latex to be obtained. Further, it is possible to enhance the adhesion of the composite resin particle latex to a base material in a case where the composite resin particle latex is used as a coating film.

Specific examples of the vinyl-based monomer having an acid group include: unsaturated carboxylic acids and acid anhydrides thereof such as acrylic acid, methacrylic acid, fumaric acid, maleic acid, itaconic acid, maleic anhydride, and itaconic anhydride; and monomers having a sulfonic acid group, such as sodium styrene sulfonate, sodium 2-sulfoethyl methacrylate, ammonium 2-sulfoethyl methacrylate, acrylamide tert-butyl sulfonic acid, and sodium acrylamide tert-butyl sulfonate. One of these vinyl-based monomers each having an acid group may be used solely. Alternatively, two or more may be used in combination.

The vinyl-based monomer having an acid group is used in an amount of preferably 0.2 parts by weight to 10 parts by weight, more preferably 0.5 parts by weight to 10 parts by weight, even more preferably 0.5 parts by weight to 6 parts by weight, and even more preferably 1 part by weight to 5 parts by weight, in a case where the total amount of the monomer mixtures for forming the (A) and the (B) is regarded as 100 parts by weight. In a case where the vinyl-based monomer having an acid group is used in an amount of not less than 0.2 parts by weight, the composite resin particle latex to be obtained has excellent mechanical stability, excellent chemical stability, and excellent storage stability. It is also preferable that the amount be not more than 10% by weight, because a rapid increase in latex viscosity and a decrease in water resistance do not occur.

Further, in an embodiment of the present invention, a vinyl-based monomer having a hydroxy group can also be used as the (b2) used in the [step 2]. It is preferable to have a hydroxy group, because it is possible to enhance the dispersibility of a pigment, and possible to introduce a crosslinking point with isocyanate, melamine, or the like.

Specific examples of the vinyl-based monomer having a hydroxy group include: 2-hydroxyethyl (meth)acrylate, 2-hydroxypropyl (meth)acrylate, 2-hydroxyethyl vinyl ether, and hydroxystyrene; ARONIX (registered trademark) 5700 manufactured by TOAGOSEI CO., LTD.; placcel (registered trademark) FA-1, FA-4, FM-1, and FM-4 manufactured by Daicel Chemical Industries, Ltd.; HE-10, HE-20, HP-10, and HP-20 manufactured by NIPPON SHOKUBAI CO., LTD.; BLEMMER (registered trademark) PEP series, NKH-5050, and GLM manufactured by NOF Corporation; and hydroxy group-containing vinyl-based modified hydroxyalkyl vinyl-based monomers. One of these vinyl-based monomers each having a hydroxy group may be used solely. Alternatively, two or more may be used in combination.

The vinyl-based monomer having a hydroxy group is used in an amount of preferably 0.2 parts by weight to 50 parts by weight, more preferably 1 part by weight to 30 parts by weight, and even more preferably 2 parts by weight to 20 parts by weight, in a case where the total amount of the monomer mixtures for forming the (A) and the (B) is regarded as 100 parts by weight.

In an embodiment of the present invention, a vinyl-based monomer having a polyoxyalkylene chain can also be used as the (b2) used in the [step 2]. It is preferable to have a polyoxyalkylene chain, because the mechanical stability and chemical stability of the composite resin particle latex to be obtained are enhanced even in a case where the vinyl-based monomer having an acid group is not used.

Specific examples of the vinyl-based monomer having a polyoxyalkylene chain include: BLEMMER (registered trademark) PE-90, PE-200, PE-350, AE-90, AE-200, AE-350, PP-500, PP-800, PP-1000, AP-400, AP-550, AP-800, 700PEP-350B, 10PEP-550B, 55PET-400, 30PET-800, 55PET-800, 30PPT-800, 50PPT-800, 70PPT-800, PME-100, PME-200, PME-400, PME-1000, PME-4000, AME-400, 50POEP-800B, 50AOEP-800B, AEP, AET, APT, PLE, ALE, PSE, ASE, PKE, AKE, PNE, ANE, PNP, ANP, and PNEP-600 manufactured by NOF Corporation; Light Ester (registered trademark) 130MA, 041MA, and MTG, and Light Acrylate (registered trademark) EC-A, MTG-A, 130A, DPM-A, P-200A, NP-4EA, NP-8EA, and EHDG-A manufactured by Kyoeisha Chemical Co., Ltd.; MA-30, MA-50, MA-100, MA-150, RMA-1120, RMA-564, RMA-568, RMA-506, MPG130-MA, Antox MS-60, MPG-130MA, RMA-150M, RMA-300M, RMA-450M, RA-1020, RA-1120, and RA-1820 manufactured by Nippon Nyukazai Co., Ltd., and NK-ESTER M-20G, M-40G, M-90G, M-230G, AMP-10G, AMP-20G, AMP-60G, AM-90G, and LA manufactured by SHIN-NAKAMURA CHEMICAL Co., Ltd. One of these vinyl-based monomers each having a polyoxyalkylene chain may be used solely. Alternatively, two or more may be used in combination.

The vinyl-based monomer having a polyoxyalkylene chain is used in an amount of preferably 0.2 parts by weight to 10 parts by weight, more preferably 1 part by weight to 10 parts by weight, and even more preferably 2 parts by weight to 5 parts by weight, in a case where the total amount of the monomer mixtures for forming the (A) and the (B) is regarded as 100 parts by weight.

As the (b2) used in the [step 2] in the present invention, the (E) compound having at least two non-conjugated double bonds can be used. In this case, a structure is obtained in which crosslinking is present in the particles generated. As a result, the water resistance of a coating film formed is enhanced.

The (E) compound having at least two non-conjugated double bonds is used in an amount of preferably 0.1 parts by weight to 5 parts by weight, more preferably 0.5 parts by weight to 5 parts by weight, and even more preferably 1 part by weight to 3 parts by weight, in a case where the total amount of the monomer mixture for forming the (B) is regarded as 100 parts by weight.

In an embodiment of the present invention, by using a fluorine-containing vinyl-based monomer as the (b2) used in the [step 2], it is also possible to impart a high level of water repellency and oil repellency.

Specific examples of the fluorine-containing vinyl-based monomer include trifluoro (meth)acrylate, pentafluoro (meth)acrylate, perfluorocyclohexyl (meth)acrylate, 2,2,3,3-tetrafluoropropyl methacrylate, and β-(perfluorooctyl)ethyl (meth)acrylate. One of these fluorine-containing vinyl-based monomers may be used solely. Alternatively, two or more may be used in combination.

The fluorine-containing vinyl-based monomer is used in an amount of preferably 0.1 parts by weight to 50 parts by weight, more preferably 1 part by weight to 40 parts by weight, and even more preferably 2 parts by weight to 30 parts by weight, in a case where the total amount of the monomer mixtures for forming the (A) and the (B) is regarded as 100 parts by weight.

In an embodiment of the present invention, by using, as the (b2) used in the [step 2], a monomer having an alkoxysilyl group, it is possible to impart crosslinkability, and possible to enhance adhesion to glass, metal, and the like.

Specific examples of the monomer having an alkoxysilyl group include vinyltrimethoxysilane, γ-(meth)acryloxypropyltrimethoxysilane, vinyltriethoxysilane, γ-(meth)acryloxypropyltriethoxysilane, γ-(meth)acryloxypropyltripropoxysilane, γ-(meth)acryloxypropyltributoxysilane, vinylmethyldimethoxysilane, γ-(meth)acryloxypropylmethyldimethoxysilane, vinylmethyldiethoxysilane, γ-(meth)acryloxypropylmethyldiethoxysilane, γ-(meth)acryloxypropylmethyldipropoxysilane, and γ-(meth)acryloxypropylmethyldibutoxysilane. One of these monomers each having an alkoxysilyl group may be used solely. Alternatively, two or more may be used in combination.

The monomer having an alkoxysilyl group is used in an amount of preferably 0.1 parts by weight to 30 parts by

EP 4 491 646 A1

weight, more preferably 0.5 parts by weight to 20 parts by weight, and even more preferably 1 part by weight to 10 parts by weight, in a case where the total amount of the monomer mixtures for forming the (A) and the (B) is regarded as 100 parts by weight.

In an embodiment of the present invention, by using, as the (b2) used in the [step 2], an ethylenically unsaturated monomer having a carbonyl group derived from a keto group or an aldehyde group, it is possible to enhance adhesion to a film.

Specific examples of the ethylenically unsaturated monomer having a carbonyl group include acrolein, diacetoneacrylamide, diacetonemethacrylamide, acetoacetoxyethyl methacrylate, formyl styrene, and vinyl alkyl ketones having 4 to 7 carbon atoms (e.g., vinyl methyl ketone, vinyl ethyl ketone, and vinyl butyl ketone). Among these, diacetoneacrylamide and diacetonemethacrylamide are particularly preferable, in terms of reactivity, availability, and economy. One of these ethylenically unsaturated monomers each having a carbonyl group derived from a keto group or an aldehyde group may be used solely. Alternatively, two or more may be used in combination.

The ethylenically unsaturated monomer having a carbonyl group derived from a keto group or an aldehyde group is used in an amount of preferably 0.1% by weight to 10% by weight and more preferably 1% by weight to 5% by weight of all of the monomer mixture for forming the (B) acrylic resin composition.

In an embodiment of the present invention, it is also possible to impart crosslinkability by obtaining the acrylic resin (B) with use of the ethylenically unsaturated monomer having a carbonyl group derived from a keto group or an aldehyde group as the (b2) in the [step 2] and then adding, to the latex, (D) a hydrazine derivative having at least two hydrazino groups or at least two semicarbazide groups per molecule. This makes it possible to enhance the water resistance, solvent resistance, and adhesion of the coating film, an ink, and the like to be obtained. Furthermore, it is possible to enhance the alcohol abrasion resistance of the ink, by adding the ethylenically unsaturated monomer having a carbonyl group derived from a keto group or an aldehyde group and the (D) component and increasing the amount of the ethylenically unsaturated monomer having a carbonyl group derived from a keto group or an aldehyde group to not less than 3% by weight of all of the monomer mixture for forming the B) acrylic resin composition.

Specific examples of the (D) hydrazine derivative having at least two hydrazino groups or at least two semicarbazide groups per molecule include: saturated aliphatic carboxylic acid dihydrazides having 2 to 18 carbon atoms, such as oxalic acid dihydrazide, malonic acid dihydrazide, glutaric acid dihydrazide, succinic acid dihydrazide, adipic acid dihydrazide, and sebacic acid dihydrazide; monoolefinically unsaturated dicarboxylic acid dihydrazides such as maleic acid dihydrazide, fumaric acid dihydrazide, and itaconic acid dihydrazide; phthalic acid dihydrazides, terephthalic acid dihydrazides, and isophthalic acid dihydrazides and dihydrazide, trihydrazide, and tetrahydrazide of pyromellitic acid; nitrilotriacetic acid trihydrazide, citric acid trihydrazide, 1,2,4-benzene trihydrazide, ethylenediaminetetraacetic acid tetrahydrazide, and 1,4,5,8-naphthoic acid tetrahydrazide; polyhydrazide obtained by reacting an lower polymer having a carboxylic acid lower alkyl ester group with hydrazine or a hydrazine hydrate (see Japanese Patent Publication, Tokukoushou, No. 52-22878); carbonic dihydrazide and bissemicarbazide; and (i) multifunctional semicarbazide obtained by excessively reacting a dihydrazine compound and any of the above-listed dihydrazides with diisocyanate, such as hexamethylene diisocyanate or isophorone diisocyanate, and a polyisocyanate compound derived therefrom, (ii) an aqueous multifunctional semicarbazide obtained by excessively reacting any of the above-listed dihydrazides with an isocyanate group in a reaction product of the polyisocyanate compound and an active hydrogen compound containing a hydrophilic group, such as polyether polyols and polyethylene glycol monoalkyl ethers, and (iii) a mixture of the multifunctional semicarbazide and the aqueous multifunctional semicarbazide (see Japanese Patent Application Publication, Tokukaihei, No. 8-151358 and Japanese Patent Application Publication, Tokukaihei, No. 8-245878). One of these (D) hydrazine derivatives each having at least two hydrazino groups or at least two semicarbazide groups per molecule may be used solely. Alternatively, two or more may be used in combination.

The (D) hydrazine derivative having hydrazino groups or semicarbazide groups is blended such that the total amount of a functional group selected from hydrazide groups, semicarbazide groups, and hydrazone groups is preferably 0.01 mol to 2 mol and more preferably 0.05 mol to 1.5 mol with respect to 1 mol of the carbonyl group in the (B) acrylic resin.

On the other hand, in a case where the (B) acrylic resin in the [step 2] has excessively high hydrophilicity, the (B) acrylic resin concentrates in the vicinity of surfaces of the composite resin particles, and the interface between the (B) acrylic resin and the (A) vinyl chloride-based resin becomes clear. As a result, it may become difficult to obtain a modification effect to be aimed, or the latex viscosity may be rapidly increased. Thus, it is preferable that not less than 60% by weight and more preferably not less than 80% by weight of all of the monomer mixture for forming the (B) acrylic resin be a hydrophobic monomer having a solubility of less than 5 g/L in water at 20°C, because it is possible to decrease the viscosity of the latex. In a case where the ratio of the hydrophobic monomer is not less than 60% by weight, the (B) acrylic resin does not concentrate in the vicinity of the surfaces of the particles. This causes the properties of the vinyl chloride resin to be easily exhibited, and makes it possible to decrease the latex viscosity. Therefore, productivity and economy are enhanced.

Note that, in this specification, a value shown in manufacturer's SDS is employed as the solubility of a monomer in water. The following are the solubilities of main monomers in water (temperatures in parentheses are evaluation temperatures).

· Vinyl chloride: 8.8 g/L (25°C)
· Butyl methacrylate: 0.36 g/L (20°C)
· Ethyl methacrylate: 4.69 g/L (20°C)
· Methyl methacrylate: 15.3 g/L (20°C)
· Styrene: 0.32 g/L (25°C)
· Butyl acrylate: 1.7 g/L (20°C)
· 2-ethylhexyl acrylate: 0.025 g/L (30°C)
· Methacrylic acid: ∞
· Diacetoneacrylamide: not less than 100 g/ 100 g
· 2-ethylhexyl methacrylate: 0.0031 g/L (20°C)
· Isodecyl methacrylate: 0.000199 g/L (20°C)
· Acrylic acid: 1000 g/L (25°C)
. 2-hydroxyethyl methacrylate: 100 g/L (20°C)
· 2-hydroxyethyl acrylate: 1000 g/L (25°C)

Note, here, that the solubility in water decreases as a dissolution temperature decreases. Therefore, in a case where an evaluation temperature corresponding to the value shown in manufacturer's SDS is not lower than 20°C, the solubility at 20°C is considered to be equal to or lower than the value.

On the other hand, in an embodiment of the present invention, the glass transition temperature (hereinafter, referred to as "Tg") of the (B) acrylic resin is preferably set to be lower than the Tg of the (A) vinyl chloride-based resin, in order that impact resistance, plasticity, and film forming properties are enhanced.

Note that the glass transition temperature (Tg) of a resin obtained by polymerizing a monomer mixture is calculated by the following Fox formula.

$$1 / Tg = \Sigma(W_n / Tg_n) / 100$$

Here, $W_n$ represents % by weight of a monomer n, and the $Tg_n$ represents the Tg (absolute temperature) of a homopolymer formed from the monomer n.

The following are the Tg values of main homopolymers.

· Vinyl chloride: 80°C
· Butyl methacrylate: 20°C
· Ethyl methacrylate: 54°C
· Methyl methacrylate: 105°C
· Styrene: 100°C
· Butyl acrylate: -54°C
· 2-ethylhexyl acrylate: -70°C
· Methacrylic acid: 144°C
· Diacetoneacrylamide: 77°C
· 2-ethylhexyl methacrylate: -10°C
· Isodecyl methacrylate: -30°C
· Acrylic acid: 106°C
· 2-hydroxyethyl methacrylate: 55°C
· 2-hydroxyethyl acrylate: -15°C

In an embodiment of the present invention, in the [step 2], a monomer which has an alkyl group having 8 or more carbon atoms, e.g., alkyl (meth)acrylate which has an alkyl group having 8 or more carbon atoms, is also preferably used, as each of the (b1) and the (b2), in an amount of not less than 50% by weight of all of the monomer mixture for forming the (B) acrylic resin composition. This makes it possible to enhance adhesion to PET and corrugated plastic.

In the production method in accordance with an embodiment of the present invention, a redox polymerization initiator containing a polymerization initiator and a reducing agent is used in the [step 2]. This makes it possible to keep a polymerization temperature low, and possible to suppress pyrolysis of the vinyl chloride component. Furthermore, it is possible to improve the storage stability of the latex of the composite resin particles to be obtained, and possible to decrease the water absorption of the coating film.

Examples of the polymerization initiator include organic peroxides and hydrogen peroxide solutions. Examples of the organic peroxides include t-butyl hydroperoxide, cumene hydroperoxide, t-butyl peroxy isopropylcarbonate, paramenthane hydroperoxide, 1, 1,3,3-tetramethylbutyl hydroperoxide, benzoyl peroxide, and lauroyl peroxide. One of these polymerization initiators may be used solely. Alternatively, two or more may be used in combination.

Among these, the polymerization initiator is more preferably an organic peroxide. That is, the redox polymerization initiator is more preferably a redox polymerization initiator in which an organic peroxide and a reducing agent are combined. This makes it possible to further improve the storage stability of the latex of the composite resin particles to be obtained, and possible to further decrease the water absorption of the coating film.

Specific examples of the reducing agent include sodium sulfite, sodium thiosulfate, sodium hydroxymethanesulfinate, ascorbic acid, sodium ascorbate, Rongalite, Bruggolite (registered trademark) FF-6, and thiourea dioxide. Note that, in terms of environmental considerations, the reducing agent is particularly preferably Bruggolite (registered trademark) FF-6 and thiourea dioxide, each of which does not generate formaldehyde. One of these reducing agents may be used solely. Alternatively, two or more may be used in combination.

Furthermore, in the [step 2], the polymerization initiator and the reducing agent may be used in combination as the redox polymerization initiator and the redox polymerization initiator may be further used in combination with an oxidation-reduction catalyst. In other words, the redox polymerization initiator may be used in the presence of the oxidation-reduction catalyst. As the oxidation-reduction catalyst, for example, a transition metal complex generated by using a transition metal salt and a chelating agent in combination can be used. Examples of the transition metal salt include ferrous(II) sulfate, copper(II) sulfate, and copper chloride. Examples of the chelating agent include EDTA·2Na, tartaric acid, and ammonia. In a case where ferrous(II) sulfate is used as the transition metal salt and EDTA·2Na is used as the chelating agent, Fe-EDTA is generated and functions as the oxidation-reduction catalyst. In particular, for the polymerization for the (B) acrylic resin in the [step 2], it is more preferable that the organic peroxide and the reducing agent are used in combination as the redox polymerization initiator and the oxidation-reduction catalyst be further used in combination with the redox polymerization initiator.

In an embodiment of the present invention, as the polymerization initiator used for the polymerization for the (B) acrylic resin in the [step 2], another polymerization initiator may be used in combination with the above-described redox polymerization initiator containing the polymerization initiator and the reducing agent. It is also preferable that the polymerization initiator used for the polymerization for the (B) acrylic resin in the [step 2] do not contain persulfate, from the viewpoint of the water resistance (in particular, decrease in water absorption, decrease in water whitening, and the like).

The polymerization initiator in the [step 2] is used in an amount of preferably 0.01 parts by weight to 5 parts by weight, and more preferably 0.02 parts by weight to 3 parts by weight, with respect to the total amount, which is regarded as 100 parts by weight, of the monomer mixture of the (b1) and the (b2). In a case where the amount of the polymerization initiator used is not less than 0.01 parts by weight, the polymerization progresses suitably. In a case where the amount of the polymerization initiator used is not more than 5 parts by weight, it is possible to suitably control generation of heat. Note, here, that the amount of the polymerization initiator used does not include the amount of the reducing agent used. Note also that, in a case where the oxidation-reduction catalyst is used in combination with the polymerization initiator, the amount of the polymerization initiator used does not include the amounts of the reducing agent used and the oxidation-reduction catalyst used.

The reducing agent in the above-described redox polymerization initiator is used in an amount of preferably 0.5 times to 10 times, and more preferably 0.6 times to 7 times the weight of the polymerization initiator combined as the redox polymerization initiator. It is preferable that the amount of the reducing agent used fall within the above range, because a stable polymerization behavior is exhibited.

In a case where the oxidation-reduction catalyst is used in combination with the redox polymerization initiator, the transition metal salt in the oxidation-reduction catalyst is used in an amount of preferably 0.001 times to 0.05 times, and more preferably 0.002 times to 0.03 times the weight of the reducing agent used. The chelating agent in the oxidation-reduction catalyst is used in an amount of preferably 1 time to 10 times the weight of the transition metal salt.

In an embodiment of the present invention, a surfactant used for the polymerization for the (B) acrylic resin in the [step 2] can be one that is the same as any of those listed for the (A) vinyl chloride-based resin in the step 1.

Similarly to the (A) vinyl chloride-based resin in the [step 1], (C) a reactive surfactant having a polymerizable double bond in one molecule is preferably used as a part or all of the surfactant also in the [step 2], in terms of suppression of generation of new particles and the water resistance (in particular, decrease in water absorption, decrease in water whitening, and the like), the weather resistance, and the glossiness. In particular, in a case where a reactive surfactant having a polyoxyalkylene group in a molecule is used, it is possible to enhance the mechanical stability and the storage stability.

Furthermore, in at least one of the [step 1] and the [step 2], more preferably in both of the [step 1] and the [step 2], the (C) reactive surfactant having a polymerizable double bond in one molecule is more preferably used as a part or all of the surfactant. This makes it possible to further enhance the water resistance (in particular, decrease in water absorption, decrease in water whitening, and the like) and the glossiness, and makes it possible to obtain the coating film having no haze.

In the composite resin particles obtained by an embodiment of the present invention, the ratio between the (A) vinyl chloride-based resin and the (B) acrylic resin (the (A) vinyl chloride-based resin : the (B) acrylic resin) is preferably 95:5 to 20:80 by a weight ratio, from the viewpoint of the impact resistance, the plasticity, and the film forming properties. Note that, in a case where the composite resin particles are used as a hard molded product, the ratio is particularly preferably 95:5 to 70:30, from the viewpoint of the impact resistance. In a case where the composite resin particles are used for a soft molded product, a paint, an ink, and the like, the ratio is particularly preferably 70:30 to 30:70, from the viewpoint of the plasticity and the film forming properties.

In an embodiment of the present invention, the average particle diameter of the composite resin particles after completion of the [step 2] is preferably 20 nm to 500 nm, and more preferably 50 nm to 300 nm, as measured by dynamic light scattering. It is preferable that the average particle diameter of the composite resin particles be not less than 20 nm, because the viscosity is not excessively increased, and stability is enhanced. Further, it is preferable that the average particle diameter of the composite resin particles be not more than 500 nm, because good water resistance is exhibited.

Furthermore, in a case where the composite resin particle latex to be obtained is used, as it is, as a transparent paint and a transparent ink, good adhesion, good water resistance, and good water whitening resistance are exhibited in particular, by adjusting the average particle diameter of the composite resin particles to 60 nm to 120 nm.

The composite resin particles obtained by an embodiment of the present invention can be used as they are in the form of a latex or may be dried and used as a powder.

In a case where the composite resin particles are used as they are in the form of a latex, the composite resin particles can be used as a coating material such as a paint and an ink. In this case, an additive used in a coating material, such as a pigment (e.g., titanium dioxide, calcium carbonate, kaolin clay, talc, barium sulfate, white carbon, carbon, red iron oxide, ocher, and cyanine blue), a film foaming aid, a colloidal silica, a plasticizer, a solvent, a dispersion agent, a wetting agent, a preservative, an antifreezing agent, a photo stabilizer, an ultraviolet absorber, a defoaming agent, and a silane coupling agent, can also be added.

In a case where the composite resin particles are used as a powder, examples of a method for obtaining the powder include a method in which one or more coagulating agents selected from the group consisting of acids and salts are added to the obtained composite resin particle latex so that the composite resin particle latex is coagulated, heat treatment is carried out at a temperature of, for example, not lower than 40°C and not higher than 110°C, washing, dehydration, and drying are carried out, and then sieving is carried out with use of a sieve having a given size. There is also a method in which powder spray drying or the like is used to obtain the powder.

The obtained powder can be molded and used as a molded product. When the molded product is obtained, a thermal stabilizer, a stabilization aid, a lubricant, a processing aid, an antioxidant, a photo stabilizer, a pigment, an inorganic filler, a plasticizer, and the like can be used, as necessary.

In a case where the thickness of the molded product is 1 mm, the tensile modulus of the molded product is preferably not less than 5 MPa and not more than 500 MPa, more preferably not less than 10 MPa and not more than 300 MPa, and even more preferably not less than 15 MPa and not more than 150 MPa, as measured in conformity with JIS K 6251, from the viewpoint that the molded product is suitably used as a soft molded product. Examples of the soft molded product include various molded products (e.g., soft film, sheet, and plate) obtained by a calendar molding method, an injection molding method, an extrusion molding method, and the like. Specific representative examples include: medical bags; tubes; films and sheets for automotive interiors; desk mats for stationery; soft materials for writing materials; wire coating materials; floor materials; and various sealing materials.

In a case where the thickness of the molded product is 1 mm, the tensile modulus of the molded product is preferably more than 500 MPa and not more than 2500 MPa, more preferably not less than 550 MPa and not more than 2300 MPa, and even more preferably not less than 600 MPa and not more than 2100 MPa, as measured in conformity with JIS K 6251, from the viewpoint that the molded product is suitably used as a hard molded product. Examples of the hard molded product include various molded products (e.g., hard film, sheet, and plate) obtained by a calendar molding method, an injection molding method, an extrusion molding method, and the like. Specific representative examples include: films and sheets for printing; films and sheets for automotive interiors; films, sheets, and containers for foods and pharmaceuticals; films, sheets, plates, roofing materials, wall materials, window frame materials, guttering materials, and various tubing and tubing joints for constructions.

<Summary>

Embodiments of the present invention include the following.

<1> A method for producing composite resin particles, including the following steps 1 and 2, wherein, in the step 2, a redox polymerization initiator containing a polymerization initiator and a reducing agent is used:

[step 1]

a step of obtaining (A) a vinyl chloride-based resin by carrying out emulsion polymerization of a monomer mixture constituted by more than 90 parts by weight and not more than 100 parts by weight of (a1) a vinyl chloride monomer and not less than 0 parts by weight and less than 10 parts by weight of (a2) an ethylenically unsaturated monomer that is copolymerizable with the vinyl chloride monomer [wherein a total amount of (a1) and (a2) is 100 parts by weight]; and

[step 2]

a step of obtaining (B) an acrylic resin by carrying out, in the presence of the (A) vinyl chloride-based resin, emulsion polymerization of a monomer mixture constituted by 50 parts by weight to 100 parts by weight of (b1) a (meth)acrylic acid alkyl ester monomer and 0 parts by weight to 50 parts by weight of (b2) an ethylenically unsaturated monomer that is copolymerizable with (meth)acrylic acid alkyl ester [wherein a total amount of (b1) and (b2) is 100 parts by weight].

As supplemental remarks, each of the above [step 1] and [step 2] may be carried out at one time or may be alternatively carried out over a plurality of times. In the latter case, the composition of a corresponding one of the monomer mixtures is changed and each of the above [step 1] and [step 2] is carried out over a plurality of times.

<2> The method as described in <1>, wherein a weight ratio between the (A) vinyl chloride-based resin and the (B) acrylic resin is 95:5 to 20:80.

<3> The method as described in <1> or <2>, wherein, when at least the step 1 and/or the step 2 are/is carried out, (C) a reactive surfactant is used.

<4> The method as described in any one of <1> through <3>, wherein not less than 60% by weight of the monomer mixture used in the step 2 is a hydrophobic monomer having a solubility of not more than 5 g/L in water.

<5> The method as described in any one of <1> through <4>, wherein a part or all of the (b2) ethylenically unsaturated monomer used in the step 2 is an ethylenically unsaturated monomer having a carboxyl group, and the ethylenically unsaturated monomer having a carboxyl group is used in an amount of not more than 6% by weight of all monomers (A)+(B) used in the steps 1 and 2.

<6> The method as described in any one of <1> through <5>, wherein a part or all of the (b2) ethylenically unsaturated monomer used in the step 2 is an ethylenically unsaturated monomer having a carbonyl group derived from a keto group or an aldehyde group.

<7> The method as described in <6>, wherein, after the step 2 is finished, (D) a hydrazine derivative having at least two hydrazino groups or at least two semicarbazide groups per molecule is added.

<8> The method as described in any one of <1> through <7>, wherein, when the step 1 is carried out, (E) a compound having at least two non-conjugated double bonds is used.

<9> The method as described in any one of <1> through <8>, wherein the redox polymerization initiator is a redox polymerization initiator obtained by combining an organic peroxide and a reducing agent.

<10> The method as described in any one of <1> through <9>, wherein the redox polymerization initiator is used in the presence of an oxidation-reduction catalyst.

<11> Composite resin particles obtained by a method described in any one of <1> through <10>. <12> A molded product obtained by molding composite resin particles described in <11>.

<13> An ink containing composite resin particles described in <11>.

<14> A paint containing composite resin particles described in <11>.

Examples

The present invention will be described in more detail on the basis of examples. Note, however, that the present invention is not limited only to these examples. Note that, in the following description, the term "parts" means "parts by weight", and the term "%" means "% by weight", unless otherwise particularly specified.

First, various measurement methods and evaluation methods are described.

<Polymerization conversion rate>

The polymerization conversion rate of obtained composite resin particles was calculated by measuring the solid content concentration of an obtained composite resin particle latex and then dividing the solid content concentration by a theoretical solid content concentration in a case where it was assumed that all introduced monomers were polymerized. The polymerization conversion rate was indicated by "%". Note that the solid content concentration of the composite resin particle latex was calculated by a formula below on the basis of weight data obtained by carrying out the following operation.

A certain amount of the obtained composite resin particle latex was poured into an aluminum container whose weight ($w_1$) was previously measured, and then a weight ($w_2$) was measured. Thereafter, the composite resin particle latex was dried in a dryer at 120°C for 1 hour. The weight ($w_3$) of the aluminum container containing a solid content after the drying was measured.

Solid content concentration (%) of composite resin particle latex = $(w_3-w_1) / (w_2-w_1) \times 100$

<Average particle diameter and particle size distribution>

The average particle diameter and particle size distribution of the obtained composite resin particles were measured as follows. With use of a particle size distribution measurement device (manufactured by MicrotracBEL Corp., "Nanotrac Wave-EX 150"), which employed dynamic light scattering, the composite resin particle latex was diluted so that the concentration thereof was adjusted to a concentration at which a load index in sample loading became approximately 1, and then the average particle diameter and the particle size distribution were measured on the basis of volume.

<Viscosity>

With use of a BM-type viscometer, the viscosity of the obtained composite resin particle latex was measured at a liquid temperature of 25°C and with 60 rotations.

<Minimum film forming temperature: MTF>

The minimum film forming temperature (hereinafter, referred to as "MFT") of the obtained composite resin particles was measured with use of TP-801LT MFT tester manufactured by Tester Sangyo Co., Ltd.

<THF-insoluble content>

The obtained composite resin particle latex was thinly spread in a polyethylene container, and dried in a dryer at 60°C for 16 hours to obtain a solid product. The obtained solid product was put into a bag prepared with use of a 200-mesh metal gauze whose weight ($W_1$) was previously measured, and the total weight ($W_2$) of the solid product and the bag was measured. Thereafter, the bag was immersed in tetrahydrofuran (hereinafter, abbreviated to "THF") at room temperature (23°C) for 16 hours.

The bag was taken out from the THF, dried in a dryer at 120°C for 1 hour, and allowed to cool to room temperature in a desiccator. Thereafter, a weight ($W_3$) was measured. With use of obtained weight data, a THF-insoluble content of the obtained composite resin particles was calculated by the following formula.

$$\text{THF-insoluble content (\%)} = (W_3-W_1)/(W_2-W_1) \times 100$$

<Tensile modulus of molded sheet product>

(Powdering)

The obtained composite resin particle latex was coagulated with use of calcium chloride, and heat-treated at 80°C for 60 minutes. Thereafter, the obtained heat-treated product was dehydrated, and dried at 55°C for 24 hours in a hot air dryer to obtain powdered composite resin particles.

(Preparation of molded sheet product)

100 parts of the powdered composite resin particles, 1.0 part of a tin-based stabilizer (manufactured by Nittoh Chemical Co., Ltd., TVS #1360), 1.0 part of a processability improving agent (manufactured by KANEKA CORPORATION, Kane Ace (registered trademark) PA-20), 0.5 parts of a lubricant (manufactured by Emery Oleochemicals Japan Ltd., Loxiol (registered trademark) GH-4), and 0.4 parts of a lubricant (manufactured by Emery Oleochemicals Japan Ltd., Loxiol (registered trademark) G-70S) were heated to 110°C while being stirred, and then cooled to room temperature to obtain a compound (total weight: 102.9 parts).

The obtained compound was kneaded at 190°C for 5 minutes with use of two-roll mill (Nippon Roll MFG. Co., Ltd., 8-inch mixing roller) to prepare a sheet. Thereafter, several sheets thus obtained were stacked, and pressurized at a pressure of 100 kgf/cm$^2$ and at 190°C for 10 minutes with use of a heat pressing machine (manufactured by Shinto Metal Industries, Ltd., 37-ton press) to prepare a test piece for a tensile test (shaped in conformity with JIS K No. 6251-1) (thickness: 1 mm).

(Measurement of tensile modulus)

A tensile test was carried out with use of the test piece for a tensile test (thickness: 1 mm) so as to measure a tensile modulus. The tensile test was carried out in conformity with JIS K6251, with use of a tensile testing machine (manufactured by Shimadzu Corporation, Autograph AG-X), with a chuck-to-chuck distance of 70 mm, and at a tensile speed of 200 mm/min.

<Storage stability of latex>

The obtained composite resin particle latex was put in a glass closed container, and left to stand in a dryer at 60°C for 14 days. Thereafter, the presence of an agglutinate was visually checked.

<Water absorption>

The obtained composite resin particle latex was thinly poured into a polypropylene container so that a thickness thereof after drying became approximately 1 mm, and then dried in a dryer at 40°C for 16 hours. A dried coating film thus obtained was taken out from a mold, and cut into a size of 20 mm x 15 mm to prepare a test piece. The weight (W0) of the test piece was measured.

The test piece was immersed in deionized water at 23°C for 24 hours. Thereafter, the test piece was taken out from the deionized water, water adhering to a surface of the test piece was absorbed with use of paper, and then a weight (W1) was immediately measured. A water absorption was calculated in accordance with the following formula.

$$\text{Water absorption (\%)} = (W1-W0)/WO * 100$$

<Evaluation of ink properties 1>

[Preparation of ink]

An ink was prepared as follows with use of the obtained composite resin particle latex. Deionized water was added to the composite resin particle latex so that a solid content in the ink was adjusted to 7 parts. Subsequently, solvents, surfactants, and a pigment dispersion were blended in parts shown in Table 1. Thereafter, an obtained mixture was stirred with use of a magnetic stirrer for 15 minutes.

[Table 1]

| Component | Name | Manufacturer | Evaluation blending (part) | Remarks |
|---|---|---|---|---|
| Adjustment water | Ion-exchanged water | | 36.8 | Including that brought by latex |
| Latex | Various latexes | | 7.0 | As solid content |
| Solvent | 1,3-propanediol | Reagent | 7.5 | |
| | Propylene glycol monomethyl ether | Reagent | 22.5 | |
| Surfactant | SURFYNOL 440 | EVONIK | 1.0 | Acetylene glycol-based |
| | TEGO Wet 280 | EVONIK | 0.2 | Silicone-based |
| Pigment dispersion | Color Max W Eco Black | Nippon Paint Co., Ltd. | 25.0 | Commercial pigment dispersion for water-based paint Carbon black 15-20% Diethanolamine 1-5% Others 16.7-21.7% |
| Total | | | 100.0 | |

(Preparation of evaluation test bodies)

The prepared ink was applied to various base materials shown in Table 2 with use of a bar coater No. 6 (thickness: 13.74 um), dried in a dryer at 60°C for 10 minutes, and then aged at 23°C for 1 or more days. Products thus obtained were used as evaluation test bodies.

[Table 2]

| Base material | Manufacturer | Product name | Product number | Thickness | Surface treatment |
|---|---|---|---|---|---|
| Biaxially oriented polypropylene (OPP) | TOYOBO | PYLEN (registered trademark) film-OT | P2161 | 20 $\mu$m | Corona treatment |
| Biaxially oriented nylon 6 | TOYOBO | HARDEN (registered trademark) film | N1102 | 15 $\mu$m | Corona treatment |
| Polyvinyl chloride (PVC) | 3M | Controltac (registered trademark) film | 160-30 White | 0.11-0.13 mm (Including adhesive) | |

(Evaluation of adhesion)

A cellophane tape (width: 18 mm) having a length of approximately 10 cm was attached to and brought into firm contact with an ink surface of each of the evaluation test bodies. The attached cellophane tape was peeled off vigorously from the left end thereof, and peeling of the ink was observed.
Note that determination was carried out in accordance with the following criteria.

A The ink was not peeled off at all.
B An area in which the ink was peeled off was less than 30%.
C The area in which the ink was peeled off was not less than 30% and less than 70%.
D The area in which the ink was peeked off was not less than 70% and less than 100%.
E The ink was completely peeled off.

(Evaluation of water resistance)

The ink surface of the evaluation test body whose base material was PVC was rubbed back and forth 10 times with use of a cotton swab containing water, and then a state thereof was observed.
Note that determination was carried out in accordance with the following criteria.

A Coloring of the cotton swab was not seen, and the ink was not peeled off at all.
B The cotton swab was slightly colored, and the ink was not peeled off.
C The cotton swab was colored, and the ink was not peeled off.
D The cotton swab was colored, and the ink was also peeled off.
E The ink dissolved in the water.

(Evaluation of alcohol resistance)

The ink surface of the evaluation test body whose base material was PVC was rubbed back and forth 10 times with use of a cotton swab containing methanol, and then a state thereof was observed.
Note that determination was carried out in accordance with the following criteria.

Insoluble. The ink did not dissolve in the methanol.
Soluble. The ink dissolved in the methanol.

<Evaluation of ink properties 2>

[Preparation of ink]

An ink was prepared as follows with use of the obtained composite resin particle latex. Deionized water was added to the composite resin particle latex so that a solid content in the ink was adjusted to 7 parts. Subsequently, solvents, surfactants, and a pigment dispersion were blended in parts shown in Table 3. Thereafter, an obtained mixture was stirred with use of a magnetic stirrer for 15 minutes.

[Table 3]

| Component | Name | Manufacturer | Evaluation blending (part) | Remarks |
|---|---|---|---|---|
| Adjustment water | Ion-exchanged water | | 35.8 | Including that brought by latex |
| Latex | Various latexes | | 7.0 | As solid content |
| Solvent | 1,3-propanediol | Reagent | 7.5 | |
| | Propylene glycol monomethyl ether | Reagent | 22.5 | |
| Surfactant | SURFYNOL 440 | EVONIK | 1.0 | Acetylene glycol-based |
| | TEGO Wet 280 | EVONIK | 0.2 | Silicone-based |
| | DISPEX Ultra FA 4437 | BASF | 1.0 | Modified natural oil-based (nonionic) |
| Pigment dispersion | MICROPIGMO WMBK-71 | ORIENT CHEMICAL INDUSTRIES | 25.0 | Commercial pigment dispersion for water-based paint Carbon black 5% Dispersed resin etc. 1.5% Volatile components such as water 18.5% |
| Total | | | 100.0 | |

(Preparation of evaluation test bodies)

The prepared ink was applied to various base materials shown in Table 4 with use of a bar coater No. 6 (thickness: 13.74 $\mu$m), dried in a dryer at 60°C for 10 minutes, and then aged at 23°C for 1 or more days. Products thus obtained were used as evaluation test bodies.

[Table 4]

| Base material | Manufacturer | Product name | Product number | Thickness | Surface treatment |
|---|---|---|---|---|---|
| Biaxially oriented polypropylene (OPP) | Oji F-Tex | ALPHAN S (antistatic) | SS-121 | 20 $\mu$m | Corona treatment |
| Biaxially oriented Polyethylene terephthalate (PET) | TOYOBO | TOYOBO ESTER (registered trademark) film | E5102 | 12 $\mu$m | Corona treatment |
| Biaxially oriented nylon 6 (NY) | TOYOBO | HARDEN (registered trademark) film | N1102 | 15 $\mu$m | Corona treatment |
| Polyvinyl chloride (PVC) | 3M | Controltac (registered trademark) film | 160-30 White | 0.11-0.13 mm (Including adhesive) | |
| Corrugated plastic | YAMAKOH | Corrugated plastic sheet | - | 3 mm | - |

(Evaluation of adhesion)

With regard to the evaluation test bodies whose base materials were OPP, PET, and NY, a cellophane tape (width: 18 mm) having a length of approximately 10 cm was attached to and brought into firm contact with an ink surface of each of the evaluation test bodies. The attached cellophane tape was peeled off vigorously from the left end thereof, and peeling of the ink was observed.

With regard to the evaluation test bodies whose base materials were PVC and corrugated plastic, six lengthwise cuts and six widthwise cuts were made at intervals of 2 mm in an ink surface on each of the evaluation test bodies with use of a cutter knife such that the six lengthwise cuts and the six widthwise cuts were orthogonal to each other and formed the shape of a lattice in which the number of cells was 25 (25 cells). A cellophane tape was then attached to and brought into firm contact with the ink surface. The attached cellophane tape was peeled off vigorously from an end of the tape at an angle of 45 degrees, and peeling of the ink was observed.

Note that determination was carried out in accordance with the following criteria.

A The ink was not peeled off at all.
B An area in which the ink was peeled off was less than 30%.
C The area in which the ink was peeled off was not less than 30% and less than 70%.
D The area in which the ink was peeked off was not less than 70% and less than 100%.
E The ink was completely peeled off.

(Evaluation of water resistance), (Evaluation of alcohol resistance)

Evaluation of water resistance and evaluation of alcohol resistance were carried out by the same methods as in

<Evaluation of ink properties 1>.

(Evaluation of alcohol abrasion resistance)

With use of a Gakushin-type fastness friction testing machine, the ink surface of the evaluation test body whose base material was OPP was rubbed back and forth 10 times with use of a cotton cloth containing ethanol, and then a state thereof was observed.

A The ink was not peeled off at all.
B An area in which the ink was peeled off was less than 30%.
C The area in which the ink was peeled off was not less than 30% and less than 70%.
D The area in which the ink was peeked off was not less than 70% and less than 100%.
E The ink was completely peeled off.

<Evaluation of coating film properties>

(Preparation of paint)

A wetting agent, a film foaming aid, a thickener, a defoaming agent, and water were added in parts shown in Table 5 to the obtained composite resin particle latex while stirring was carried out with use of a disper agitator. After the addition of all of these components was finished, stirring was carried out for another 15 minutes to prepare a paint. Note that a viscosity was adjusted by the amount of the thickener so that no crawling occurred at the time of application.

[Table 5]

| Component | Name | Manufacturer | Evaluation blending (part) | Remarks |
|---|---|---|---|---|
| Latex | Various latexes | | 35.0 | As solid content |
| Wetting agent | OLFINE EXP. 4200 | Nissin Chemical Industry | 1.3 | |
| Film foaming aid | Dipropylene glycol mono-n-butyl ether | Reagent | 4.9 | |
| Thickener | RHEOBYK-H 7625 VF | BYK-Chemie | 0-3.3 | |
| Defoaming agent | AGITAN 295 | Münzing Chemie | 0.3 | |

(continued)

| Component | Name | Manufacturer | Evaluation blending (part) | Remarks |
|---|---|---|---|---|
| Adjustment water | Ion-exchanged water | | 55.2-58.5 | Including that brought by latex |
| Total | | | 41.5 | |

(Preparation of coating film evaluation test body)

The prepared paint was applied to a black acrylic plate with use of a 200-$\mu$m-thick applicator, and left to stand still in a room, which was controlled to a temperature of 23°C and a humidity of 50%, for 7 days so as to be dried. An obtained product was used as an evaluation test body.

(Appearance of coating film)

The appearance of a paint applied surface of the evaluation test body was visually observed.

(Glossiness)

The 60-degree specular gloss of the paint applied surface of the evaluation test body was measured with use of a gloss meter (manufactured by NIPPON DENSHOKU INDUSTRIES CO., LTD.: VG 7000).

(Water whitening resistance)

The evaluation test body, the lightness (L*) of the paint applied surface of which was previously measured with use of a colorimeter (manufactured by NIPPON DENSHOKU INDUSTRIES CO., LTD., handy-type colorimeter NR-12A), was immersed in water at 23°C for 24 hours. After the evaluation test body was taken out from the water, the water on the surface was quickly wiped out, and the lightness (L*) was measured. A $\Delta$L* value was calculated by subtracting an L* value before the immersion in the water from an L* value after the immersion in the water. A lower $\Delta$L* (closer to 0) indicates that water whitening resistance is better.

<Synthesis Example 1>

[Step 1] Polymerization for (A) vinyl chloride-based resin latex

Into a polymerization container equipped with a stirrer, introduced were 120 parts of deionized water, 0.094 parts of sodium formaldehyde sulfoxylate, 0.044 parts of baking soda (sodium hydrogen carbonate), 0.65 parts of sodium lauryl sulfate, 0.00165 parts of ferrous sulfate heptahydrate, and 0.00275 parts of disodium ethylenediaminetetraacetate (EDTA·2Na).
After oxygen was removed from the polymerization container, 100 parts of a vinyl chloride monomer was introduced. A temperature was increased to 60°C, and an aqueous t-butyl hydroperoxide solution (0.1%) was continuously added over 270 minutes as a polymerization initiator so that t-butyl hydroperoxide became 0.012 parts.
After 45 minutes of the start of polymerization (at a time when an internal temperature reached 60°C), an aqueous ADEKAREASOAP (registered trademark) SR-1025 (manufactured by ADEKA CORPORATION, active ingredient: 25%) solution (5%) was uniformly and continuously added over 165 minutes as a reactive surfactant so that ADEKAREASOAP SR-1025 became 1.35 parts as an active ingredient.
When the internal pressure of the polymerization container decreased to not more than 0.5 MPa, the polymerization reaction was stopped. Then, unreacted vinyl chloride was removed to obtain (A) a vinyl chloride-based resin latex (PVC-1). Note that the obtained latex (PVC-1) had a polymerization conversion rate of 75%, an average particle diameter of 92 nm, and a solid content concentration of 33%.

<Synthesis Example 2>

[Step 1] Polymerization for (A) vinyl chloride-based resin latex

Polymerization was carried out by the same operation as that in Synthesis Example 1, except that, for the purpose of introduction of a grafting point with (B) an acrylic resin in a [step 2], 0.1 parts of triallyl cyanurate (TAC) was mixed with an aqueous ADEKAREASOAP (registered trademark) SR-1025 solution and then added. Then, unreacted vinyl chloride was removed to obtain (A) a vinyl chloride-based resin latex (PVC-2).

The (A) vinyl chloride-based resin latex (PVC-2) had a polymerization conversion rate of 74%, an average particle diameter of 85 nm, and a solid content concentration of 33%. Note, however, that 0.07 parts by weight which is shown in Table 7 and which is the amount of the TAC is the amount (parts by weight) of the TAC contained in 50 parts by weight of (A) a vinyl chloride-based resin, in consideration of the polymerization conversion rate of the (A) vinyl chloride-based resin.

<Example 1>

[Step 2] (Polymerization for composite resin particle latex)

Into a polymerization container equipped with a stirrer, introduced were 157 parts of the (A) vinyl chloride resin-based latex (PVC-1) prepared in Synthesis Example 1 (corresponding to 50 parts of (A) a vinyl chloride-based resin), 0.6 parts of polyoxyethylene polyoxypropylene lauryl ether (DKS Co. Ltd., NOIGEN LP-180), and 7.5 parts of deionized water.

After oxygen was removed from the polymerization container, a temperature was increased to 50°C. Then, 0.028 parts of t-butyl hydroperoxide, which was a polymerization initiator, and 0.011 parts by weight of Bruggolite (registered trademark) FF-6 (manufactured by Bruggemann Chemical), which was a reducing agent, were added. Furthermore, a monomer emulsified liquid obtained by (i) adding 0.75 parts, as an active ingredient, of Aqualon (registered trademark) AR-1025 (manufactured by DKS Co. Ltd., active ingredient: 25%), which was a reactive surfactant, 0.75 parts by weight, as an active ingredient, of LATEMUL (registered trademark) PD-430S (manufactured by Kao Corporation, active ingredient: 25%), which was a reactive surfactant, and 19 parts by weight of deionized water (including that brought by the surfactants) to 50 parts by weight of an acrylic monomer mixture shown in (Ac-1) in Table 6 and (ii) emulsifying these components was uniformly and continuously added over 200 minutes. During the continuous addition of the monomer emulsified liquid, 0.049 parts of t-butyl hydroperoxide, which was a polymerization initiator, and 0.030 parts of Bruggolite (registered trademark) FF-6, which was a reducing agent, were added over 8 times.

After the continuous addition of the monomer emulsified liquid was finished, postpolymerization was carried out for 90 minutes. Thereafter, a liquid temperature was decreased to not higher than 40°C, neutralization was carried out with use of ammonia, and a solid content concentration was adjusted to 40% with use of deionized water. A composite resin particle latex 1 (HB-1) was thus obtained.

The latex properties (average particle diameter, particle size distribution, viscosity, MFT, and THF-insoluble content) of the obtained composite resin particle latex HB-1 were measured. Table 7 shows results.

<Example 2>

[Step 2] (Polymerization for composite resin particle latex)

A composite resin latex 2 (HB-2) was obtained by carrying out the same operation as that in Example 1, except that a vinyl chloride resin-based latex was changed from the (A) vinyl chloride resin-based latex (PVC-1) prepared in Synthesis Example 1 to the (A) vinyl chloride resin-based latex (PVC-2) prepared in Synthesis Example 2.

The latex properties (average particle diameter, particle size distribution, viscosity, MFT, and THF-insoluble content) of the obtained composite resin particle latex HB-2 were measured. Table 7 shows results.

<Example 3>

[Step 2] (Polymerization for composite resin particle latex)

A composite resin latex 3 (HB-3) was obtained by carrying out the same operation as that in Example 2, except that a monomer mixture for forming (B) an acrylic resin was set as shown in (Ac-2) in Table 6.

The latex properties (average particle diameter, particle size distribution, viscosity, MFT, and THF-insoluble content) of the obtained composite resin particle latex HB-3 were measured. Table 7 shows results.

<Example 4>

[Step 2] (Polymerization for composite resin particle latex)

A composite resin latex 3 (HB-4) was obtained by carrying out the same operation as that in Example 2, except that a monomer mixture for forming (B) an acrylic resin was set as shown in (Ac-3) in Table 6.

The latex properties (average particle diameter, particle size distribution, viscosity, MFT, and THF-insoluble content) of the obtained composite resin particle latex HB-4 were measured. Table 7 shows results.

<Example 5>

[Step 2] (Polymerization for composite resin particle latex)

A composite resin latex 3 (HB-5) was obtained by carrying out the same operation as that in Example 2, except that a monomer mixture for forming (B) an acrylic resin was set as shown in (Ac-4) in Table 6.

The latex properties (average particle diameter, particle size distribution, viscosity, MFT, and THF-insoluble content) of the obtained composite resin particle latex HB-5 were measured. Table 7 shows results.

<Example 6>

[Step 2] (Polymerization for composite resin particle latex)

A composite resin particle latex 3 (HB-6) was obtained by carrying out the same operation as that in Example 2, except that a monomer mixture for forming (B) an acrylic resin was set as shown in (Ac-5) in Table 6. Note, however, that HB-6 was diluted so that a solid content became 31%, because, after neutralization with ammonia, a viscosity increased rapidly and stirring became difficult.

The latex properties (average particle diameter, particle size distribution, viscosity, MFT, and THF-insoluble content) of the obtained composite resin particle latex HB-6 were measured. Table 7 shows results.

<Comparative Example 1>

[Step 1]

Into a polymerization container equipped with a stirrer, introduced were 76 parts of deionized water, 0.0125 parts of baking soda (sodium hydrogen carbonate), 0.44 parts of sodium lauryl sulfate, and one tenth of 50 parts of a monomer mixture shown in (Ac-6) in Table 6.

After oxygen was removed from the polymerization container, a temperature was increased to 50°C. Then, 0.035 parts of t-butyl hydroperoxide, which was a polymerization initiator, 0.0007 parts of ferrous sulfate heptahydrate, 0.0028 parts of disodium ethylenediaminetetraacetate (EDTA·2Na), and 0.35 parts by weight of Bruggolite (registered trademark) FF-6, which was a reducing agent, were added. Thereafter, stirring was carried out for 30 minutes.

Subsequently, 0.021 parts of t-butyl hydroperoxide, which was a polymerization initiator, and 0.01125 parts by weight of Bruggolite (registered trademark) FF-6, which was a reducing agent, were added. Furthermore, a monomer emulsified liquid obtained by (i) adding 1.8 parts, as an active ingredient, of ADEKAREASOAP (registered trademark) SR-1025, which was a reactive surfactant, 0.6 parts of NOIGEN LP-180, and 19 parts of ion-exchanged water (including that brought by the surfactants) to the remaining nine tenth of 50 parts of the monomer mixture shown in (Ac-6) in Table 6 and (ii) emulsifying these components was uniformly and continuously added over 180 minutes. During the continuous addition of the monomer emulsified liquid, 0.049 parts of t-butyl hydroperoxide, which was a polymerization initiator, and 0.040 parts of Bruggolite (registered trademark) FF-6, which was a reducing agent, were added over four times.

[Step 2]

Subsequently, 0.028 parts of t-butyl hydroperoxide, which was a polymerization initiator, and 0.011 parts by weight of Bruggolite (registered trademark) FF-6, which was a reducing agent, were added. Subsequently, a monomer emulsified liquid obtained by (i) adding 0.75 parts, as an active ingredient, of Aqualon (registered trademark) AR-1025 (manufactured by DKS Co. Ltd., active ingredient: 25%), which was a reactive surfactant, 0.75 parts by weight, as an active ingredient, of LATEMUL (registered trademark) PD-430S (manufactured by Kao Corporation, active ingredient: 25%), which was a reactive surfactant, and 19 parts by weight of deionized water (including that brought by the surfactants) to 50 parts by weight of a monomer mixture shown in (Ac-1) in Table 6 and (ii) emulsifying these components was uniformly and continuously added over 200 minutes. During the addition, 0.049 parts of t-butyl hydroperoxide and 0.030 parts of Bruggolite (registered trademark) FF-6 were added over 8 times.

After the addition of the monomer emulsified liquid was finished, postpolymerization was carried out for 90 minutes. Thereafter, a temperature was decreased to not higher than 40°C, neutralization was carried out with use of ammonia, and a solid content concentration was adjusted to 40% with use of deionized water. A two-stage acrylic resin particle latex (AC-1) was thus obtained.

The latex properties (average particle diameter, particle size distribution, viscosity, MFT, and THF-insoluble content) of the obtained two-stage acrylic resin particle latex AC-1 were measured. Table 7 shows results.

[Table 6]

| Polymerization composition in [step 2] | | | Ac-1 | Ac-2 | Ac-3 | Ac-4 | Ac-5 | Ac-6 |
|---|---|---|---|---|---|---|---|---|
| Composition of acrylic monomers (part) | (b1) | BMA | 9.40 | - | 36.00 | 17.50 | 16.40 | 12.00 |
| | | BA | 23.50 | 27.50 | - | 29.50 | 27.60 | - |
| | | 2EHA | - | - | 11.00 | - | - | - |
| | | MMA | 14.10 | 19.50 | - | - | - | 34.50 |
| | (b2) | MAA | 3.00 | 3.00 | 3.00 | 3.00 | 6.00 | - |
| | | St | - | - | - | - | - | 3.50 |
| | Total of (b1)+(b2) | | 50.00 | 50.00 | 50.00 | 50.00 | 50.00 | 50.00 |

BMA Butyl methacrylate
BA Butyl acrylate
2EHA 2-ethylhexyl acrylate
MMA Methyl methacrylate
MAA Methacrylic acid
St Styrene

[Table 7]

| Step | | | | Raw material | | Example 1 HB-1 | Example 2 HB-2 | Example 3 HB-3 | Example 4 HB-4 |
|---|---|---|---|---|---|---|---|---|---|
| Step 1 | (A) | (a1) | | VCM | (part) | 50.00 | 50.00 | 50.00 | 50.00 |
| | | (a2) | | BMA | (part) | - | - | - | - |
| | | | | MMA | (part) | - | - | - | - |
| | | | | BA | (part) | - | - | - | - |
| | | | | St | (part) | - | - | - | - |
| | | Total of (a1)+(a2) monomers | | | (part) | 50.00 | 50.00 | 50.00 | 50.00 |
| | | (E) | | TAC | (part) | - | 0.07 | 0.07 | 0.07 |
| | | (C) | | SR-1025 | (part) | 0.90 | 0.90 | 0.90 | 0.90 |
| | | | | SLS | (part) | 0.40 | 0.40 | 0.40 | 0.40 |
| | | | | LP-180 | (part) | 0.60 | 0.60 | 0.60 | 0.60 |
| Step 2 | (B) | (b1) | | EMA | (part) | - | - | - | - |
| | | | | BMA | (part) | 9.40 | 9.40 | - | 36.00 |
| | | | | BA | (part) | 23.50 | 23.50 | 27.50 | - |
| | | | | 2EHA | (part) | - | - | - | 11.00 |
| | | | | MMA | (part) | 14.10 | 14.10 | 19.50 | - |
| | | (b2) | | MAA | (part) | 3.00 | 3.00 | 3.00 | 3.00 |
| | | Total of (b1)+(b2) monomers | | | (part) | 50.00 | 50.00 | 50.00 | 50.00 |
| | | (C) | | AR-1025 | (part) | 0.75 | 0.75 | 0.75 | 0.75 |
| | | | | PD-430S | (part) | 0.75 | 0.75 | 0.75 | 0.75 |

(continued)

| Step | | | Raw material | | Example 1 | Example 2 | Example 3 | Example 4 |
|---|---|---|---|---|---|---|---|---|
| | | | | | HB-1 | HB-2 | HB-3 | HB-4 |
| Glass transition temperature (°C) | | | Step 1 | | 80 | 80 | 80 | 80 |
| | | | Step 2 | | -1 | -1 | -2 | -2 |
| Hydrophobic monomer having solubility of not more than 5 g/L in water (%)* | | | | | 66 | 66 | 55 | 94 |
| Monomer having carboxyl group (%)** | | | | | 3 | 3 | 3 | 3 |
| Latex properties | | Solid content concentration | | (%) | 40 | 40 | 40 | 40 |
| | | Particle size distribution | | | Single peak | Single peak | Single peak | Single peak |
| | | Average particle diameter | | (nm) | 109 | 102 | 106 | 108 |
| | | Viscosity | | (mPa·s) | 35 | 544 | 1,410 | 58 |
| | | Minimum film forming temperature | | (°C) | 45 | 50 | 52 | 57 |
| | | THF-insoluble content | | (%) | 49 | 65 | 67 | 49 |

[Table 7 (continued)]

| Step | | | | Raw material | | Example 5 | Example 6 | Comparative Example 1 |
|---|---|---|---|---|---|---|---|---|
| | | | | | | HB-5 | HB-6 | AC-1 |
| Step 1 | (A) | | (a1) | VCM | (part) | 50.00 | 50.00 | - |
| | | | (a2) | BMA | (part) | - | - | 12.00 |
| | | | | MMA | (part) | - | - | 34.50 |
| | | | | BA | (part) | - | - | - |
| | | | | St | (part) | - | - | 3.50 |
| | | | Total of (a1)+(a2) monomers | | (part) | 50.00 | 50.00 | 50.00 |
| | | | (E) | TAC | (part) | 0.07 | 0.07 | - |
| | | | (C) | SR-1025 | (part) | 0.90 | 0.90 | - |
| | | | | SLS | (part) | 0.40 | 0.40 | 0.40 |
| | | | | LP-180 | (part) | 0.60 | 0.60 | 0.60 |
| Step 2 | (B) | | (b1) | EMA | (part) | - | - | - |
| | | | | BMA | (part) | 17.50 | 16.40 | 9.40 |
| | | | | BA | (part) | 29.50 | 27.60 | 23.50 |
| | | | | 2EHA | (part) | - | - | - |
| | | | | MMA | (part) | - | - | 14.10 |
| | | | (b2) | MAA | (part) | 3.00 | 6.00 | 3.00 |
| | | | Total of (b1)+(b2) monomers | | (part) | 50.00 | 50.00 | 50.00 |
| | | | (C) | AR-1025 | (part) | 0.75 | 0.75 | 0.75 |
| | | | | PD-430S | (part) | 0.75 | 0.75 | 0.75 |

(continued)

| Step | | | Raw material | | Example 5 | Example 6 | Comparative Example 1 |
|---|---|---|---|---|---|---|---|
| | | | | | HB-5 | HB-6 | AC-1 |
| Glass transition temperature (°C) | | | Step 1 | | 80 | 80 | 80 |
| | | | Step 2 | | -25 | -18 | -1 |
| Hydrophobic monomer having solubility of not more than 5 g/L in water (%)* | | | | | 94 | 88 | 66 |
| Monomer having carboxyl group (%)** | | | | | 3 | 6 | 3 |
| Latex properties | | Solid content concentration | | (%) | 41 | 31 | 40 |
| | | Particle size distribution | | | Single peak | Single peak | Single peak |
| | | Average particle diameter | | (nm) | 104 | 106 | 102 |
| | | Viscosity | | (mPa·s) | 78 | 948 | 1,350 |
| | | Minimum film forming temperature | | (°C) | 16 | less than 5 | 75 |
| | | THF-insoluble content | | (%) | 62 | 63 | 71 |

VCM Vinyl chloride monomer
TAC Triallyl cyanurate
SR-1025 Reactive surfactant <manufactured by ADEKA CORPORATION, ADEKA REASOAP SR-1025: active ingredient 25%>
SLS Sodium lauryl sulfate
LP-180 Polyoxyethylene polyoxypropylene lauryl ether <manufactured by DKS Co. Ltd., NOIGEN LP-180>
AR-1025 Reactive surfactant <manufactured by DKS Co. Ltd., Aqualon AR-1025: active ingredient 25%>
PD-430S Reactive surfactant <manufactured by Kao Corporation, LATEMUL PD-430S: active ingredient 25%>
* Proportion in all monomers constituting step 2
** Proportion in all monomers (A)+(B) constituting all steps

The composite resin particles obtained in each of Examples 1 to 6 exhibited particle size distribution having a single peak. Moreover, an increase corresponding to the amount of the monomers added in the [step 2] was seen in the average particle diameter of the composite resin particles obtained in each of Examples 1 to 6. Thus, it is estimated that the (A) vinyl chloride-based resin and the (B) acrylic resin-based resin coexisted in an identical particle. That is, it is considered that the composite resin particles of the (A) vinyl chloride-based resin and the (B) acrylic resin were obtained.

The composite resin particles obtained in each of Examples 1 to 6 exhibited a decrease in minimum film forming temperature, as compared with the resin particles of Comparative Example 1, which were obtained by carrying out multistage polymerization with use of only the (B) acrylic resin. According to a comparison between Example 1 and Example 2, the THF-insoluble content was further increased by introducing the (E) compound having at least two non-conjugated double bonds into the (A) vinyl chloride-based resin. As indicated by Example 3, in a case where the hydrophobic monomer having a solubility of not more than 5 g/L in water at 20°C was used in an amount of less than 60% by weight of the monomer mixture for forming the (B) acrylic resin composition, the latex viscosity was slightly increased. As indicated by Example 6, in a case where the monomer having a carboxyl group was used in an amount of more than 5% by weight with respect to the total amount, which was regarded as 100 parts by weight, of the monomer mixtures for forming (A) and (B), the latex viscosity was slightly increased.

Further, by carrying out rolling and pressing after powdering the composite resin particle latex obtained in each of Examples 2 and 5, it was possible to obtain a molded sheet product. When the tensile modulus of the obtained molded sheet product was measured, the tensile modulus of the molded sheet product obtained from the composite resin particle latex in Example 2 was 1333 MPa, and the tensile modulus of the molded sheet product obtained from the composite resin particle latex in Example 5 was 135 MPa. The molded sheet product obtained from the composite resin particle latex in Example 2 was a sheet suitable as a hard molded product. The molded sheet product obtained from the composite resin particle latex in Example 5 was a sheet suitable as a soft molded product.

<Example 7>

A composite resin particle latex 8 (HB-8) was obtained by carrying out the same operation as that in Example 1 (composite latex HB-1), except that, in a [step 2] (polymerization for the composite resin particle latex), a monomer mixture for forming (B) an acrylic resin was set as shown in Ac-7 in Table 8.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-8 were measured. Table 9 shows results.

<Example 8>

A composite resin particle latex 9 (HB-9) was obtained by carrying out the same operation as that in Example 1 (composite latex HB-1), except that, in a [step 2] (polymerization for the composite resin particle latex), a monomer mixture for forming (B) an acrylic resin was set as shown in Ac-8 (containing 2 parts of diacetoneacrylamide) in Table 8.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-9 were measured. Table 9 shows results.

<Example 9>

A composite resin particle latex 9A (HB-9A) was obtained by adding, to the composite resin particle latex 9 (HB-9), 1 part by weight of adipic acid dihydrazide (ADH), as a 10% aqueous solution, with respect to all of monomer mixtures, which were regarded as 100 parts by weight.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-9A were measured. Table 9 shows results.

<Example 10>

A composite resin particle latex 10 (HB-10) was obtained by carrying out the same operation as that in Example 8 (composite resin particle latex HB-9), except that, in a [step 2] (polymerization for the composite resin particle latex), the surfactants were changed from AR-1025 and PD-430S, which were reactive surfactants, to sodium lauryl sulfate (SLS) and NOIGEN LP-180, which were non-reactive surfactants. Further, in the same way as that in Example 9, a composite resin particle latex 10A (HB-10A) was obtained by adding 1 part by weight of adipic acid dihydrazide (ADH) to the obtained composite resin particle latex 10 (HB-10).

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-10A were measured. Table 9 shows results.

<Example 11>

A composite resin particle latex 11A (HB-11A) was obtained by carrying out the same operation as that in Example 9 (composite resin particle latex 9A), except that, in a [step 2] (polymerization for the composite resin particle latex), a monomer mixture for forming (B) an acrylic resin was set as shown in Ac-9 in Table 8.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-11A were measured. Table 9 shows results.

<Example 12>

A composite resin particle latex 12A (HB-12A) was obtained by carrying out the same operation as that in Example 9 (composite resin particle latex 9A), except that, in a [step 2] (polymerization for composite resin latex particles), a monomer mixture for forming (B) an acrylic resin was set as shown in Ac-10 in Table 8.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-12A were measured. Table 9 shows results.

<Example 13>

A composite resin particle latex 12 (HB-12) was obtained by carrying out the same operation as that in Example 9 (composite resin particle latex HB-9), except that, in a [step 2] (polymerization for the composite resin particle latex), monomers for forming (B) an acrylic resin were set as shown in Ac-11 (containing 1 part of diacetoneacrylamide) in Table 8.

Further, a composite resin particle latex 13A (HB-13A) was obtained by carrying out the same operation as that in Example 9 (composite resin particle latex 9A), except that the amount of adipic acid dihydrazide (ADH) added to the obtained composite resin particle latex 12 (HB-12) was changed to 0.5 parts.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-13A were measured. Table 10 shows results.

<Example 14>

[Step 2] (Polymerization for composite resin particle latex)

Into a polymerization container equipped with a stirrer, introduced were 220 parts of the (A) vinyl chloride resin-based latex (PVC-1) prepared in Synthesis Example 1 (corresponding to 70 parts of the (A) vinyl chloride-based resin) and 0.84 parts of polyoxyethylene polyoxypropylene lauryl ether (DKS Co. Ltd., NOIGEN LP-180).

After oxygen was removed from the polymerization container, a temperature was increased to 50°C. Then, 0.028 parts of t-butyl hydroperoxide, which was a polymerization initiator, and 0.011 parts by weight of Bruggolite (registered trademark) FF-6 (manufactured by Bruggemann Chemical), which was a reducing agent, were added. Furthermore, a monomer emulsified liquid obtained by (i) adding 0.45 parts, as an active ingredient, of Aqualon (registered trademark) AR-1025 (manufactured by DKS Co. Ltd., active ingredient: 25%), which was a reactive surfactant, 0.45 parts by weight, as an active ingredient, of LATEMUL (registered trademark) PD-430S (manufactured by Kao Corporation, active ingredient: 25%), which was a reactive surfactant, and 12 parts by weight of deionized water (including that brought by the surfactants) to 30 parts by weight of a monomer mixture shown in Ac-12 in Table 8 and (ii) emulsifying these components was uniformly and continuously added over 120 minutes. During the continuous addition of the monomer emulsified liquid, 0.028 parts of t-butyl hydroperoxide, which was a polymerization initiator, and 0.018 parts of Bruggolite (registered trademark) FF-6, which was a reducing agent, were added over 5 times.

After the addition of the monomer emulsified liquid was finished, postpolymerization was carried out for 90 minutes. Thereafter, a temperature was decreased to not higher than 40°C, neutralization was carried out with use of ammonia, and a solid content was adjusted to 40% with use of deionized water. A composite resin particle latex 14 (HB-14) was thus obtained. Further, a composite resin particle latex 14A (HB-14A) was obtained by carrying out the same operation as that in Example 9, except that the amount of adipic acid dihydrazide (ADH) added to the obtained composite resin particle latex 14 was changed to 0.3 parts by weight.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-14A were measured. Table 10 shows results.

<Example 15>

[Step 2] (Polymerization for composite resin particle latex)

Into a polymerization container equipped with a stirrer, introduced were 94 parts of the (A) vinyl chloride resin-based latex (PVC-1) prepared in Synthesis Example 1 (corresponding to 30 parts of the (A) vinyl chloride-based resin) and 0.36 parts of polyoxyethylene polyoxypropylene lauryl ether (DKS Co. Ltd., NOIGEN LP-180).

After oxygen was removed from the polymerization container, a temperature was increased to 50°C. Then, 0.028 parts of t-butyl hydroperoxide, which was a polymerization initiator, and 0.011 parts by weight of Bruggolite (registered trademark) FF-6 (manufactured by Bruggemann Chemical), which was a reducing agent, were added. Furthermore, a monomer emulsified liquid obtained by (i) adding 1.05 parts, as an active ingredient, of Aqualon (registered trademark) AR-1025 (manufactured by DKS Co. Ltd., active ingredient: 25%), which was a reactive surfactant, 1.05 parts by weight, as an active ingredient, of LATEMUL (registered trademark) PD-430S (manufactured by Kao Corporation, active ingredient: 25%), which was a reactive surfactant, and 30 parts by weight of deionized water (including that brought by the surfactants) to 70 parts by weight of a monomer mixture shown in Ac-13 in Table 8 and (ii) emulsifying these components was uniformly and continuously added over 120 minutes. During the continuous addition of the monomer emulsified liquid, 0.070 parts of t-butyl hydroperoxide, which was a polymerization initiator, and 0.0375 parts of Bruggolite (registered trademark) FF-6, which was a reducing agent, were added over 10 times. After the addition of the monomer emulsified liquid was finished, postpolymerization was carried out for 90 minutes. Thereafter, a temperature was decreased to not higher than 40°C, neutralization was carried out with use of ammonia, and a solid content was adjusted to 40% with use of deionized water. A composite resin particle latex 15 (HB-15) was thus obtained. Further, a composite resin particle latex 15A (HB-15A) was obtained by carrying out the same operation as that in Example 9, except that the amount of adipic acid dihydrazide (ADH) added to the obtained composite resin particle latex 15 was changed to 0.7 parts by weight.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-15A were measured. Table 10 shows results.

<Comparative Example 2>

[Step 1]

Into a polymerization container equipped with a stirrer, introduced were 90 parts of deionized water, 0.0715 parts of sodium formaldehyde sulfoxylate, 0.033 parts of baking soda, 0.5 parts of sodium lauryl sulfate, 0.00165 parts of ferrous sulfate heptahydrate, and 0.0012 parts of disodium ethylenediaminetetraacetate (EDTA·2Na).

After oxygen was removed from the polymerization container, 50 parts of a vinyl chloride monomer and 25 parts by weight of butyl acrylate were introduced. A temperature was increased to 60°C, and then an aqueous t-butyl hydroperoxide solution (0.1%) was uniformly and continuously added over 270 minutes as a polymerization initiator so that t-butyl hydroperoxide became 0.009 parts. After 45 minutes of the start of polymerization (at a time when an internal temperature reached 60°C), an aqueous sodium lauryl sulfate (5%) was uniformly and continuously added over 140 minutes so that sodium lauryl sulfate became 1 part. When the internal pressure of the polymerization container decreased to not more than 0.5 MPa, the reaction was temporarily stopped, and unreacted vinyl chloride was removed.

[Step 2]

Subsequently, into the polymerization container, 0.75 parts of polyoxyethylene polyoxypropylene lauryl ether (manufactured by DKS Co. Ltd., NOIGEN LP-180) was introduced. The temperature was increased again to 50°C. Then, 0.028 parts of t-butyl hydroperoxide, which was a polymerization initiator, and 0.011 parts by weight of Bruggolite (registered trademark) FF-6 (manufactured by Bruggemann Chemical), which was a reducing agent, were added. Thereafter, a monomer emulsified liquid obtained by (i) adding 0.375 parts of sodium lauryl sulfate, 0.375 parts by weight of NOIGEN LP-180, and 9 parts by weight of deionized water to 25 parts by weight of butyl acrylate and (ii) emulsifying these components was uniformly and continuously added over 100 minutes. During the addition, 0.025 parts of t-butyl hydroperoxide and 0.015 parts of Bruggolite (registered trademark) FF-6 were added over four times.

After the addition of the butyl acrylate emulsified liquid was finished, postpolymerization was carried out for 90 minutes. Thereafter, the temperature was decreased to not higher than 40°C. A core/shell type vinyl chloride-based composite resin particle latex (HB-16) was thus obtained.

The latex properties (average particle diameter, particle size distribution, viscosity, MFT, and THF-insoluble content) and the ink properties (adhesion, water resistance, and alcohol resistance in the above <Evaluation of ink properties 1>) of the obtained composite resin particle latex HB-16 were measured. Table 10 shows results.

<Comparative Example 3>

[Polymerization of acrylic resin latex for blending]

Into a polymerization container equipped with a stirrer, introduced were 90 parts of deionized water, 0.0125 parts of baking soda, and 0.44 parts of sodium lauryl sulfate.

After oxygen was removed from the polymerization container, a temperature was increased to 50°C. Then, 0.028 parts of t-butyl hydroperoxide, 0.0007 parts of ferrous sulfate heptahydrate, and 0.0028 parts of disodium ethylenediaminetetraacetate (EDTA·2Na), each of which was a polymerization initiator, and 0.011 parts by weight of Bruggolite (registered trademark), which was a reducing agent, were added.

Furthermore, a monomer emulsified liquid obtained by (i) adding 0.75 parts, as an active ingredient, of Aqualon (registered trademark) AR-1025 (manufactured by DKS Co. Ltd., active ingredient: 25%), which was a reactive surfactant, 0.75 parts by weight, as an active ingredient, of LATEMUL (registered trademark) PD-430S (manufactured by Kao Corporation, active ingredient: 25%), which was a reactive surfactant, and 19 parts by weight of water (including that brought by the surfactants) to 50 parts by weight of a monomer mixture shown in Ac-14 in Table 8 and (ii) emulsifying these components was uniformly and continuously added over 200 minutes. During the continuous addition of the monomer emulsified liquid, 0.049 parts of t-butyl hydroperoxide, which was a polymerization initiator, and 0.030 parts of Bruggolite (registered trademark) FF-6, which was a reducing agent, were added over 8 times. After the addition of the monomer emulsified liquid was finished, postpolymerization was carried out for 90 minutes. Thereafter, a temperature was decreased to not higher than 40°C, neutralization was carried out with use of ammonia, and a solid content was adjusted to 27% with use of deionized water. An acrylic resin latex for blending (AC-2) was thus obtained.

Further, in the same way as that in Example 9, an acrylic resin latex for blending (AC-2A) was obtained by adding 1 part by weight of adipic acid dihydrazide (ADH) to the obtained acrylic resin latex for blending (AC-2).

The latex properties (average particle diameter, particle size distribution, viscosity, MFT, and THF-insoluble content) of the obtained acrylic resin latex for blending (AC-2A) were measured. Table 10 shows results.

[Preparation of ink]

The (A) vinyl chloride resin-based latex (PVC-1) prepared in Synthesis Example 1 and the acrylic resin latex for blending (AC-2A) were used to prepare respective inks. The inks thus prepared were blended in equal proportions (1:1), and used as an ink for evaluation.

The ink properties (adhesion, water resistance, and alcohol resistance in the above <Evaluation of ink properties 1>) of the ink for evaluation were measured. Table 10 shows results.

[Table 8]

| Polymerization composition in [step 2] | | | Ac-7 | Ac-8 | Ac-9 | Ac-10 | Ac-11 | Ac-12 | Ac-13 | Ac-14 |
|---|---|---|---|---|---|---|---|---|---|---|
| Composition of acrylic monomers (part) | (b1) | EMA | 13.33 | 12.00 | - | - | - | - | - | 12.00 |
| | | BMA | - | - | 16.80 | 8.50 | 8.70 | 5.22 | 12.18 | - |
| | | BA | 36.67 | 33.00 | 28.20 | 31.50 | 32.20 | 19.32 | 45.08 | 33.00 |
| | | MMA | - | - | - | 5.00 | 5.10 | 3.06 | 7.14 | - |
| | (b2) | MAA | | 3.00 | 3.00 | 3.00 | 3.00 | 1.80 | 4.20 | 3.00 |
| | | DAAm | | 2.00 | 2.00 | 2.00 | 1.00 | 0.60 | 1.40 | 2.00 |
| Total of (b1)+(b2) | | | 50.00 | 50.00 | 50.00 | 50.00 | 50.00 | 30.00 | 70.00 | 50.00 |

EMA Ethyl methacrylate
BMA Butyl methacrylate
BA Butyl acrylate
2EHA 2-ethylhexyl acrylate
MMA Methyl methacrylate
MAA Methacrylic acid
DAAm Diacetoneacrylamide

[Table 9]

| Step | | | Raw material | | | Example 7 | Example 8 | Example 9 |
|---|---|---|---|---|---|---|---|---|
| | | | | | | HB-8 | HB-9 | HB-9A |
| Step 1 | (A) | (a1) | VCM | (part) | | 50.00 | 50.00 | 50.00 |
| | | (a2) | BA | (part) | | - | - | - |
| | | | Total of (a1)+(a2) monomers | (part) | | 50.00 | 50.00 | 50.00 |
| | | (E) | TAC | (part) | | - | - | - |
| | | (C) | SR-1025 | (part) | | 0.90 | 0.90 | 0.90 |
| | | | SLS | (part) | | 0.40 | 0.40 | 0.40 |
| | | | LP-180 | (part) | | 0.60 | 0.60 | 0.60 |

(continued)

| Step | | | Raw material | | | Example 7 | Example 8 | Example 9 |
|---|---|---|---|---|---|---|---|---|
| | | | | | | HB-8 | HB-9 | HB-9A |
| Step 2 | (B) | (b1) | EMA | (part) | | 13.33 | 12.00 | 12.00 |
| | | | BMA | (part) | | - | - | - |
| | | | BA | (part) | | 36.67 | 33.00 | 33.00 |
| | | | MMA | (part) | | - | - | - |
| | | (b2) | MAA | (part) | | - | 3.00 | 3.00 |
| | | | DAAm | (part) | | - | 2.00 | 2.00 |
| | | | Total of (b1)+(b2) monomers | (part) | | 50.00 | 50.00 | 50.00 |
| | | (C) | AR-1025 | (part) | | 0.75 | 0.75 | 0.75 |
| | | | PD-430S | (part) | | 0.75 | 0.75 | 0.75 |
| | | | LP-180 | (part) | | - | - | - |
| | | | SLS | (part) | | - | - | - |
| Post-addition | (D) | | ADH | (part) | | - | - | 1.00 |
| Glass transition temperature (°C) | | | Step 1 | | | 80 | 80 | 80 |
| | | | Step 2 | | | -33 | -23 | -22 |
| Hydrophobic monomer having solubility of not more than 5 g/L in water (%)* | | | | | | 100 | 90 | 90 |
| Monomer having carboxyl group (%)** | | | | | | - | 3 | 3 |
| Latex properties | | | Solid content concentration | (%) | | 40 | 40 | 39 |
| | | | Particle size distribution | | | Single peak | Single peak | Single peak |
| | | | Average particle diameter | (nm) | | 112 | 110 | 110 |
| | | | Viscosity | (mPa·s) | | 405 | 405 | 365 |
| | | | Minimum film forming temperature | (°C) | | less than 5 | less than 5 | less than 5 |
| | | | THF-insoluble content | (%) | | 59 | 53 | 78 |
| Ink properties | | | Adhesion | OPP | | D | B | A |
| | | | | Nylon | | D | C | B |
| | | | | PVC | | A | A | A |
| | | | Water resistance | | | C | C | B |
| | | | Alcohol resistance | | | Soluble | Soluble | Insoluble |

[Table 9 (continued)]

| Step | | | | Raw material | | Example 10 | Example 11 | Example 12 |
|---|---|---|---|---|---|---|---|---|
| | | | | | | HB-10A | HB-11A | HB-12A |
| Step 1 | (A) | | (a1) | VCM | (part) | 50.00 | 50.00 | 50.00 |
| | | | (a2) | BA | (part) | - | - | - |
| | | | Total of (a1)+(a2) monomers | | (part) | 50.00 | 50.00 | 50.00 |
| | | | (E) | TAC | (part) | - | - | - |
| | | | (C) | SR-1025 | (part) | 0.90 | 0.90 | 0.90 |
| | | | | SLS | (part) | 0.40 | 0.40 | 0.40 |
| | | | | LP-180 | (part) | 0.60 | 0.60 | 0.60 |
| Step 2 | (B) | | (b1) | EMA | (part) | 12.00 | - | - |
| | | | | BMA | (part) | - | 16.80 | 8.50 |
| | | | | BA | (part) | 33.00 | 28.20 | 31.50 |
| | | | | MMA | (part) | - | - | 5.00 |
| | | | (b2) | MAA | (part) | 3.00 | 3.00 | 3.00 |
| | | | | DAAm | (part) | 2.00 | 2.00 | 2.00 |
| | | | Total of (b1)+(b2) monomers | | (part) | 50.00 | 50.00 | 50.00 |
| | | | (C) | AR-1025 | (part) | - | 0.75 | 0.75 |
| | | | | PD-430S | (part) | - | 0.75 | 0.75 |
| | | | | LP-180 | (part) | 0.75 | - | - |
| | | | | SLS | (part) | 0.75 | - | - |
| Post-addition | (D) | | | ADH | (part) | 1.00 | 1.00 | 1.00 |
| Glass transition temperature (°C) | | | Step 1 | | | 80 | 80 | 80 |
| | | | Step 2 | | | -22 | -22 | -22 |
| Hydrophobic monomer having solubility of not more than 5 g/L in water (%)* | | | | | | 90 | 90 | 80 |
| Monomer having carboxyl group (%)** | | | | | | 3 | 3 | 3 |
| Latex properties | | | Solid content concentration | | (%) | 40 | 39 | 39 |
| | | | Particle size distribution | | | Single peak | Single peak | Single peak |
| | | | Average particle diameter | | (nm) | 107 | 111 | 108 |
| | | | Viscosity | | (mPa·s) | 162 | 35 | 365 |
| | | | Minimum film forming temperature | | (°C) | less than 5 | less than 5 | less than 5 |
| | | | THF-insoluble content | | (%) | 75 | 80 | 83 |

(continued)

| Step | | | Raw material | | Example 10 | Example 11 | Example 12 |
|---|---|---|---|---|---|---|---|
| | | | | | HB-10A | HB-11A | HB-12A |
| Ink properties | Adhesion | OPP | | | A | A | A |
| | | Nylon | | | D | C | C |
| | | PVC | | | A | A | A |
| | Water resistance | | | | C | B | B |
| | Alcohol resistance | | | | Insoluble | Insoluble | Insoluble |

VCM Vinyl chloride monomer
SR-1025 Reactive surfactant <manufactured by ADEKA CORPORATION, ADEKA REASOAP SR-1025: active ingredient 25%>
SLS Sodium lauryl sulfate
LP-180 Polyoxyethylene polyoxypropylene lauryl ether <manufactured by DKS Co. Ltd., NOIGEN LP-180>
AR-1025 Reactive surfactant <manufactured by DKS Co. Ltd., Aqualon AR-1025: active ingredient 25%>
PD-430S Reactive surfactant <manufactured by Kao Corporation, LATEMUL PD-430S: active ingredient 25%>
DAAm Diacetoneacrylamide
ADH Adipic acid dihydrazide
* Proportion in all monomers constituting step 2
** Proportion in all monomers (A)+(B) constituting all steps

[Table 10]

| Step | | | | Raw material | | Example 13 | Example 14 | Example 15 |
|---|---|---|---|---|---|---|---|---|
| | | | | | | HB-13A | HB-14A | HB-15A |
| Step 1 | (A) | (a1) | VCM | | (part) | 50.00 | 70.00 | 30.00 |
| | | (a2) | BA | | (part) | - | - | - |
| | | Total of (a1)+(a2) monomers | | | (part) | 50.00 | 70.00 | 30.00 |
| | | (E) | TAC | | (part) | - | - | - |
| | | (C) | SR-1025 | | (part) | 0.90 | 1.26 | 0.54 |
| | | | SLS | | (part) | 0.40 | 0.56 | 0.24 |
| | | | LP-180 | | (part) | 0.60 | 0.84 | 0.36 |
| Step 2 | (B) | (b1) | EMA | | (part) | - | - | - |
| | | | BMA | | (part) | 8.70 | 5.22 | 12.18 |
| | | | BA | | (part) | 32.20 | 19.32 | 45.08 |
| | | | MMA | | (part) | 5.10 | 3.06 | 7.14 |
| | | (b2) | MAA | | (part) | 3.00 | 1.80 | 4.20 |
| | | | DAAm | | (Part) | 1.00 | 0.60 | 1.40 |
| | | Total of (b1)+(b2) monomers | | | (part) | 50.00 | 30.00 | 70.00 |
| | | (C) | AR-1025 | | (part) | 0.75 | 0.45 | 1.05 |
| | | | PD-430S | | (part) | 0.75 | 0.45 | 1.05 |
| | | | LP-180 | | (part) | - | - | - |
| | | | SLS | | (part) | - | - | - |
| Post-addition | (D) | ADH | | | (part) | 0.50 | 0.30 | 0.70 |
| Glass transition temperature (°C) | | Step 1 | | | | 80 | 80 | 80 |
| | | Step 2 | | | | -22 | -22 | -22 |

(continued)

| Step | | | Raw material | | Example 13 | Example 14 | Example 15 |
|---|---|---|---|---|---|---|---|
| | | | | | HB-13A | HB-14A | HB-15A |
| Hydrophobic monomer having solubility of not more than 5 g/L in water (%)* | | | | | 82 | 82 | 82 |
| Monomer having carboxyl group (%)** | | | | | 3 | 2 | 4 |
| Latex properties | | Solid content concentration | | (%) | 40 | 37 | 40 |
| | | Particle size distribution | | | Single peak | Single peak | Single peak |
| | | Average particle diameter | | (nm) | 110 | 100 | 125 |
| | | Viscosity | | (mPa·s) | 249 | 11 | 2,340 |
| | | Minimum film forming temperature | | (°C) | less than 5 | 60 | less than 5 |
| | | THF-insoluble content | | (%) | 74 | 47 | 92 |
| Ink properties | | Adhesion | OPP | | B | A | C |
| | | | Nylon | | C | B | C |
| | | | PVC | | A | A | A |
| | | Water resistance | | | B | B | B |
| | | Alcohol resistance | | | Insoluble | Insoluble | Insoluble |

[Table 10 (continued)]

| Step | | | | Raw material | | Comparative Example 2 | Comparative Example 3 (for blending) | |
|---|---|---|---|---|---|---|---|---|
| | | | | | | HB-16 | PVC-1 | AC-2A |
| Step 1 | (A) | (a1) | VCM | | (part) | 50.00 | 50.00 | |
| | | (a2) | BA | | (part) | 25.00 | - | |
| | | Total of (a1)+(a2) monomers | | | (part) | 75.00 | 50.00 | |
| | | (E) | TAC | | (part) | - | - | |
| | | (C) | SR-1025 | | (part) | - | 0.90 | |
| | | | SLS | | (part) | 1.50 | 0.40 | |
| | | | LP-180 | | (part) | 0.38 | 0.60 | |
| Step 2 | (B) | (b1) | EMA | | (part) | - | | - |
| | | | BMA | | (part) | - | | 8.50 |
| | | | BA | | (part) | 25.00 | | 31.50 |
| | | | MMA | | (part) | - | | 5.00 |
| | | (b2) | MAA | | (part) | - | | 3.00 |
| | | | DAAm | | (part) | - | | 2.00 |
| | | Total of (b1)+(b2) monomers | | | (part) | 25.00 | | 50.00 |
| | | (C) | AR-1025 | | (part) | - | | 0.75 |
| | | | PD-430S | | (part) | - | | 0.75 |
| | | | LP-180 | | (part) | 0.38 | | |
| | | | SLS | | (part) | 0.38 | | |

(continued)

| Step | | | Raw material | | Comparative Example 2 | Comparative Example 3 (for blending) | |
|---|---|---|---|---|---|---|---|
| | | | | | HB-16 | PVC-1 | AC-2A |
| Post-addition | (D) | ADH | (part) | | - | - | 1.00 |
| Glass transition temperature (°C) | | Step 1 | | | 20 | 80 | |
| | | Step 2 | | | -54 | - | -22 |
| Hydrophobic monomer having solubility of not more than 5 g/L in water (%)* | | | | | 100 | 0 | 80 |
| Monomer having carboxyl group (%)** | | | | | - | - | 3 |
| Latex properties | | Solid content concentration | (%) | | 40 | 33 | 27 |
| | | Particle size distribution | | | Single peak | Single peak | Single peak |
| | | Average particle diameter | (nm) | | 105 | 92 | 68 |
| | | Viscosity | (mPa·s) | | 20 | 13 | 640 |
| | | Minimum film forming temperature | (°C) | | 7 | more than 75 | less than 5 |
| | | THF-insoluble content | (%) | | 20 | 5 | 100 |
| Ink properties | | Adhesion | OPP | | E | C | |
| | | | Nylon | | E | D | |
| | | | PVC | | C | A | |
| | | Water resistance | | | E | B | |
| | | Alcohol resistance | | | Soluble | Soluble | |

VCM Vinyl chloride monomer
SR-1025 Reactive surfactant <manufactured by ADEKA CORPORATION, ADEKA REASOAP SR-1025: active ingredient 25%>
SLS Sodium lauryl sulfate
LP-180 Polyoxyethylene polyoxypropylene lauryl ether <manufactured by DKS Co. Ltd., NOIGEN LP-180>
AR-1025 Reactive surfactant <manufactured by DKS Co. Ltd., Aqualon AR-1025: active ingredient 25%>
PD-430S Reactive surfactant <manufactured by Kao Corporation, LATEMUL PD-430S: active ingredient 25%>
DAAm Diacetoneacrylamide
ADH Adipic acid dihydrazide
* Proportion in all monomers constituting step 2
** Proportion in all monomers (A)+(B) constituting all steps

The composite resin particles obtained in each of Examples 7 to 15 exhibited particle size distribution having a single peak. Moreover, a corresponding increase was seen in the average particle diameter of the composite resin particles obtained in each of Examples 7 to 15. Thus, it is estimated that the (A) vinyl chloride-based resin and the (B) acrylic resin-based resin coexisted in an identical particle. That is, it is considered that the composite resin particles of the (A) vinyl chloride-based resin and the (B) acrylic resin were obtained.

The composite resin particles obtained in each of Examples 7 to 15 exhibited a decrease in minimum film forming temperature (MFT), because the Tg of the (B) acrylic resin was not higher than -20°C. Thus, film forming properties were enhanced.

According to a comparison between Example 7 and Example 8, by copolymerizing methacrylic acid and diacetoneacrylamide as (b2), adhesion particularly to OPP and a nylon film was enhanced in a case where the ink containing the composite resin particle latex was prepared and applied to the base materials.

According to a comparison between Example 8 and Example 9, by adding adipic acid dihydrazide, which was (D) a hydrazine derivative having hydrazino groups or semicarbazide groups, the THF-insoluble content of the obtained composite resin particles was increased, and solvent resistance was enhanced. Moreover, adhesion to a film was also enhanced in a case where the ink containing the composite resin particle latex was prepared and applied to base materials.

In contrast, as in Comparative Example 3, even in a case where adipic acid dihydrazide was added after an ink blend containing the vinyl chloride-based resin particles (PVC-1) and an ink blend containing the acrylic resin particles (AC-2) were blended, the effect of enhancing adhesion when the ink was prepared and applied to base materials was small, and also the alcohol resistance was not improved.

<Synthesis Example 3>

[Step 1] Polymerization for (A) vinyl chloride-based resin latex

Into a polymerization container equipped with a stirrer, introduced were 120 parts of deionized water, 0.094 parts of sodium formaldehyde sulfoxylate, 0.044 parts of baking soda (sodium hydrogen carbonate), 0.65 parts of sodium lauryl sulfate, 0.00165 parts of ferrous sulfate heptahydrate, and 0.00275 parts of disodium ethylenediaminetetraacetate (EDTA·2Na).

After oxygen was removed from the polymerization container, 95 parts of a vinyl chloride monomer was introduced. A temperature was increased to 60°C, and an aqueous t-butyl hydroperoxide solution (0.1%) was continuously added over 270 minutes as a polymerization initiator so that t-butyl hydroperoxide became 0.012 parts. Further, an emulsified liquid was prepared by adding 1.4 parts, as an active ingredient, of ADEKAREASOAP (registered trademark) SR-1025 (manufactured by ADEKA CORPORATION, active ingredient: 25%), which was a reactive surfactant, and 18.5 parts of deionized water (including that brought by ADEKAREASOAP (registered trademark) SR-1025) to 5 parts of 2-ethylhexyl acrylate and 0.1 parts of triallyl cyanurate (TAC). This emulsified liquid was uniformly and continuously added over 165 minutes after 30 minutes of the start of polymerization (at a time when an internal temperature reached 60°C).

When the internal pressure of the polymerization container decreased to not more than 0.5 MPa, the polymerization reaction was stopped. Then, unreacted vinyl chloride was removed to obtain (A) a vinyl chloride-based resin latex (PVC-3). Note that the obtained latex (PVC-3) had a polymerization conversion rate of 86%, an average particle diameter of 100 nm, and a solid content concentration of 37%. Note, however, that the amounts which are shown in Table 11 and which are the amounts of components are the amounts (parts by weight) of the components contained in 50 parts by weight of (A) a vinyl chloride-based resin, in consideration of the polymerization conversion rate of the (A) vinyl chloride-based resin.

<Example 16>

With use of the composite resin particle latex 13A (HB-13A) obtained in Example 13, an ink was prepared by carrying out blending as shown in Table 3 in accordance with the above <Evaluation of ink properties 2>. The ink was applied to base materials shown in Table 4, and ink properties (adhesion, water resistance, alcohol resistance, and alcohol abrasion resistance in the above <Evaluation of ink properties 2>) were measured. Table 11 shows results.

<Examples 17 to 19>

Composite resin particle latexes 17A to 19A (HB-17A to HB-19A) were each obtained by carrying out the same operation as that in Example 9 (composite resin particle latex 9A), except that, in a [step 2] (polymerization for the composite resin particle latexes), monomer mixtures for forming (B) acrylic resins and the amounts of adipic acid dihydrazide (ADH) used were set as shown in HB-17A to HB-19A in Table 11.

The latex properties (average particle diameter, particle size distribution, viscosity, MFT, and THF-insoluble content) and the ink properties (adhesion, water resistance, alcohol resistance, and alcohol abrasion in the above <Evaluation of ink properties 2>), which were the same as those in Example 16, of the obtained composite resin particle latexes were measured. Table 11 collectively shows results.

<Example 20>

[Step 2] (Polymerization for composite resin particle latex)

A composite resin particle latex 20A (HB-20A) was obtained by carrying out the same operation as that in Example 9 (composite resin particle latex 9A), except that (i) a vinyl chloride resin-based latex was changed from the (A) vinyl chloride resin-based latex (PVC-2) prepared in Synthesis Example 2 to the (A) vinyl chloride resin-based latex (PVC-3) prepared in Synthesis Example 3 and (ii) a monomer mixture for forming (B) an acrylic resin and the amount of adipic acid dihydrazide (ADH) used were set as shown in HB-20A in Table 11.

The latex properties (average particle diameter, particle size distribution, viscosity, MFT, and THF-insoluble content) and the ink properties (adhesion, water resistance, alcohol resistance, and alcohol abrasion in the above <Evaluation of ink properties 2>), which were the same as those in Examples 16 to 19, of the obtained composite resin particle latex were measured. Table 11 collectively shows results.

In each of Examples 17 and 18, alkyl (meth)acrylate which had an alkyl group having 8 or more carbon atoms was used in an amount of not less than 50% as a monomer for forming the (B) component, and enhancement of adhesion to PET and corrugated plastic was seen, as compared with Example 16, in which this alkyl (meth)acrylate was not used in an amount of not less than 50%.

In Example 19, the amounts of diacetoneacrylamide, which was an ethylenically unsaturated monomer having a carbonyl group derived from a keto group or an aldehyde group, in the (b2) component and adipic acid dihydrazide, which was the (D) hydrazine derivative having hydrazino groups or semicarbazide groups, were increased, and enhancement of alcohol abrasion resistance was seen, as compared with Examples 16 to 18.

In Example 20, 2-ethylhexyl acrylate, which was the (a2) component, and triallyl cyanurate (TAC), which was the (E) component, were introduced to the (A) component, and the amounts of diacetoneacrylamide, which was an ethylenically unsaturated monomer having a carbonyl group derived from a keto group or an aldehyde group, in the (b2) component in the (B) component and adipic acid dihydrazide, which was the (D) hydrazine derivative having hydrazino groups or semicarbazide groups, were further increased, and a THF-insoluble content was enhanced as compared with Example 19.

[Table 11]

| Step | | | | Raw material | | Example 16 | Example 17 | Example 18 |
|---|---|---|---|---|---|---|---|---|
| | | | | | | HB-13A | HB-17A | HB-18A |
| Step 1 | (A) | | (a1) | VCM | (part) | 50.00 | 50.00 | 50.00 |
| | | | (a2) | 2EHA | (part) | - | - | - |
| | | | Total of (a1)+(a2) monomers | | (part) | 50.00 | 50.00 | 50.00 |
| | | | (E) | TAC | (part) | - | - | - |
| | | | (C) | SR-1025 | (part) | 0.90 | 0.90 | 0.90 |
| | | | | SLS | (part) | 0.40 | 0.40 | 0.40 |
| | | | | LP-180 | (part) | 0.60 | 0.60 | 0.60 |
| Step 2 | (B) | | (b1) | 2EHA | (part) | | | 20.00 |
| | | | | 2EHMA | (part) | | | 20.00 |
| | | | | IDMA | (part) | | 26.00 | |
| | | | | BMA | (part) | 8.70 | | |
| | | | | BA | (part) | 32.20 | 15.00 | |
| | | | | MMA | (part) | 5.10 | 5.00 | 6.00 |
| | | | (b2) | MAA | (part) | 3.00 | 3.00 | 3.00 |
| | | | | St | (part) | | | |
| | | | | DAAm | (part) | 1.00 | 1.00 | 1.00 |
| | | | Total of (b1)+(b2) monomers | | (part) | 50.00 | 50.00 | 50.00 |
| | | | (C) | AR-1025 | (part) | 0.75 | 0.75 | 0.75 |
| | | | | PD-430S | (part) | 0.75 | 0.75 | 0.75 |
| Post-addition | (D) | | | ADH | (part) | 0.50 | 0.50 | 0.50 |
| Glass transition temperature (°C) | | | Step 1 | | | 80 | 80 | 80 |
| | | | Step 2 | | | -22 | -22 | -24 |
| Hydrophobic monomer having solubility of not more than 5 g/L in water (%)* | | | | | | 82 | 80 | 80 |
| Monomer having carboxyl group (%)** | | | | | | 3.00 | 3.00 | 3.00 |
| (Meth)acrylic acid ester that has alkyl having 8 or more carbon atoms (%)*** | | | | | | 0 | 52 | 80 |

(continued)

| Step | | | Raw material | | Example 16 | Example 17 | Example 18 |
|---|---|---|---|---|---|---|---|
| | | | | | HB-13A | HB-17A | HB-18A |
| Latex properties | | Solid content concentration | | (%) | 40 | 41 | 41 |
| | | Particle size distribution | | | Single peak | Single peak | Single peak |
| | | Average particle diameter | | (nm) | 110 | 119 | 119 |
| | | Viscosity | | (mPa·s) | 249 | 67 | 67 |
| | | Minimum film forming temperature | | (°C) | less than 5 | less than 5 | less than 5 |
| | | THF-insoluble content | | (%) | 74 | 62 | 62 |
| Ink properties | | Adhesion | OPP | | A | A | A |
| | | | PET | | D | C | B |
| | | | Nylon | | C | B | B |
| | | | PVC | | A | A | A |
| | | | Corrugated plastic | | C | B | B |
| | | Water resistance | | | B | B | B |
| | | Alcohol resistance | | | Insoluble | Insoluble | Insoluble |
| | | Alcohol abrasion resistance | | | C | C | C |

[Table 11 (continued)]

| Step | | | | Raw material | | Example 19 | Example 20 |
|---|---|---|---|---|---|---|---|
| | | | | | | HB-19A | HB-20A |
| Step 1 | (A) | | (a1) | VCM | (part) | 50.00 | 47.00 |
| | | | (a2) | 2EHA | (part) | - | 3.00 |
| | | Total of (a1)+(a2) monomers | | | (part) | 50.00 | 50.00 |
| | | | (E) | TAC | (part) | - | 0.06 |
| | | | (C) | SR-1025 | (part) . | 0.90 | 0.90 |
| | | | | SLS | (part) | 0.40 | 0.40 |
| | | | | LP-180 | (part) | 0.60 | 0.60 |
| Step 2 | (B) | | (b1) | 2EHA | (part) | 37.75 | 40.00 |
| | | | | 2EHMA | (part) | | |
| | | | | IDMA | (part) | | |
| | | | | BMA | (part) | | |
| | | | | BA | (part) | | |
| | | | | MMA | (part) | 2.50 | 3.00 |
| | | | (b2) | MAA | (part) | 3.75 | 2.00 |
| | | | | St | (part) | 3.50 | |
| | | | | DAAm | (part) | 2.50 | 5.00 |
| | | Total of (b1)+(b2) monomers | | | (part) | 50.00 | 50.00 |
| | | | (C) | AR-1025 | (part) | 0.75 | 0.75 |
| | | | | PD-430S | (part) | 0.75 | 0.75 |
| Post-addition | | | (D) | ADH | (part) | 5.00 | 10.00 |

(continued)

| Step | | | Raw material | | Example 19 | Example 20 |
|---|---|---|---|---|---|---|
| | | | | | HB-19A | HB-20A |
| Glass transition temperature (°C) | | | Step 1 | | 80 | 66 |
| | | | Step 2 | | -44 | -50 |
| Hydrophobic monomer having solubility of not more than 5 g/L in water (%)* | | | | | 83 | 80 |
| Monomer having carboxyl group (%)** | | | | | 3.75 | 2.00 |
| (Meth)acrylic acid ester that has alkyl having 8 or more carbon atoms (%)*** | | | | | 76 | 80 |
| Latex properties | Solid content concentration | | | (%) | 40 | 36 |
| | Particle size distribution | | | | Single peak | Single peak |
| | Average particle diameter | | | (nm) | 111 | 129 |
| | Viscosity | | | (mPa·s) | 1,061 | 17 |
| | Minimum film forming temperature | | | (°C) | less than 5 | less than 5 |
| | THF-insoluble content | | | (%) | 72 | 91 |
| Ink properties | Adhesion | OPP | | | A | A |
| | | PET | | | C | C |
| | | Nylon | | | B | C |
| | | PVC | | | A | A |
| | | Corrugated plastic | | | B | B |
| | Water resistance | | | | B | B |
| | Alcohol resistance | | | | Insoluble | Insoluble |
| | Alcohol abrasion resistance | | | | B | B |

VCM Vinyl chloride monomer
2EHA 2-ethylhexyl acrylate
TAC Triallyl cyanurate
SR-1025 Reactive surfactant <manufactured by ADEKA CORPORATION, ADEKA REASOAP SR-1025: active ingredient 25%>
SLS Sodium lauryl sulfate
LP-180 Polyoxyethylene polyoxypropylene lauryl ether <manufactured by DKS Co. Ltd., NOIGEN LP-180>
2EHMA 2-ethylhexyl methacrylate
IDMA Isodecyl methacrylate
BMA Butyl methacrylate
BA Butyl acrylate
MMA Methyl methacrylate
MAA Methacrylic acid
St Styrene
DAAm Diacetoneacrylamide
AR-1025 Reactive surfactant <manufactured by DKS Co. Ltd., Aqualon AR-1025: active ingredient 25%>
PD-430S Reactive surfactant <manufactured by Kao Corporation, LATEMUL PD-430S: active ingredient 25%>
DAAm Diacetoneacrylamide
ADH Adipic acid dihydrazide
* Proportion in all monomers constituting step 2
** Proportion in all monomers (A)+(B) constituting all steps
*** Proportion in all monomers constituting step 2

<Synthesis Example 4>

[Step 1] Polymerization for (A) vinyl chloride-based resin latex

Polymerization was carried out by the same operation as that in Synthesis Example 1, except that (i) the amount of sodium lauryl sulfate, which was an emulsifying agent first introduced, was changed from 0.65 parts to 0.12 parts and (ii) 1.35 parts of ADEKAREASOAP (registered trademark) SR-1025 (manufactured by ADEKA CORPORATION, active ingredient: 25%), which was a reactive surfactant added continuously after 45 minutes of the start of polymerization, was changed to 1.66 parts of sodium lauryl sulfate. Then, unreacted vinyl chloride was removed to obtain (A) a vinyl chloride-based resin latex (PVC-4).
The (A) vinyl chloride-based resin latex (PVC-4) had a polymerization conversion rate of 95%, an average particle diameter of 170 nm, and a solid content concentration of 36%.

<Example 22>

[Step 2] (Polymerization for composite resin particle latex)

Into a polymerization container equipped with a stirrer, introduced were 123 parts of the (A) vinyl chloride resin-based latex (PVC-4) prepared in Synthesis Example 4 (corresponding to 43.5 parts of (A) a vinyl chloride-based resin) and 0.5 parts of polyoxyethylene polyoxypropylene lauryl ether (DKS Co. Ltd., NOIGEN LP-180).
After oxygen was removed from the polymerization container, a temperature was increased to 50°C. Then, 0.028 parts of t-butyl hydroperoxide, which was a polymerization initiator, and 0.011 parts by weight of Bruggolite (registered trademark) FF-6 (manufactured by Bruggemann Chemical), which was a reducing agent, were added. Furthermore, a monomer emulsified liquid obtained by (i) adding 0.57 parts of sodium lauryl sulfate, which was an emulsifying agent, 0.45 parts of polyoxyethylene polyoxypropylene lauryl ether (manufactured by DKS Co. Ltd., NOIGEN LP-180), which was an emulsifying agent, and 23 parts by weight of deionized water (including that brought by the surfactants) to 56.5 parts by weight of a monomer mixture shown in (b1) and (b2) in HB-22 in Table 12 and (ii) emulsifying these components was uniformly and continuously added over 230 minutes. During the continuous addition of the monomer emulsified liquid, 0.077 parts of t-butyl hydroperoxide, which was a polymerization initiator, and 0.045 parts of Bruggolite (registered trademark) FF-6, which was a reducing agent, were added over 12 times.
After the addition of the monomer emulsified liquid was finished, postpolymerization was carried out for 90 minutes. Thereafter, a temperature was decreased to not higher than 40°C, neutralization was carried out with use of ammonia, and a solid content was adjusted to 44% with use of deionized water. A composite resin particle latex 22 (HB-22) was thus obtained.
The latex properties (average particle diameter, particle size distribution, viscosity, MFT, THF-insoluble content, storage stability, and water absorption) and the coating film properties (appearance of a coating film, glossiness, and water whitening resistance) of the obtained composite resin particle latex HB-22 were measured. Table 12 shows results.

<Example 23>

[Step 2] (Polymerization for composite resin particle latex)

A composite resin particle latex 23 (HB-23) was obtained by carrying out the same operation as that in Example 22, except that a vinyl chloride resin-based latex was changed from the (A) vinyl chloride resin-based latex (PVC-4) prepared in Synthesis Example 4 to the (A) vinyl chloride resin-based latex (PVC-1) prepared in Synthesis Example 1.
The latex properties (average particle diameter, particle size distribution, viscosity, MFT, THF-insoluble content, storage stability, and water absorption) and the coating film properties (appearance of a coating film, glossiness, and water whitening resistance) of the obtained composite resin particle latex HB-23 were measured. Table 12 shows results.

<Example 24>

[Step 2] (Polymerization for composite resin particle latex)

A composite resin particle latex 24 (HB-24) was obtained by carrying out the same operation as that in Example 23, except that an emulsifying agent used in a step 2 was changed from 0.57 parts of sodium lauryl sulfate and 0.45 parts of polyoxyethylene polyoxypropylene lauryl ether (DKS Co. Ltd., NOIGEN LP-180) to 0.85 parts, as an active ingredient, of Aqualon (registered trademark) AR-1025 (manufactured by DKS Co. Ltd., active ingredient: 25%) and 0.85 parts by weight, as an active ingredient, of LATEMUL (registered trademark) PD-430S (manufactured by Kao Corporation, active ingredient: 25%), each of which was a reactive surfactant.

The latex properties (average particle diameter, particle size distribution, viscosity, MFT, THF-insoluble content, storage stability, and water absorption) and the coating film properties (appearance of a coating film, glossiness, and water whitening resistance) of the obtained composite resin particle latex HB-24 were measured. Table 12 shows results.

<Comparative Example 4>

[Step 2] (Polymerization for composite resin particle latex)

Into a polymerization container equipped with a stirrer, introduced were 170 parts of the (A) vinyl chloride resin-based latex (PVC-4) prepared in Synthesis Example 4 (corresponding to 60 parts of (A) a vinyl chloride-based resin) and 0.15 parts of potassium persulfate, which was an initiator.

After oxygen was removed from the polymerization container, a temperature was increased to 80°C. Then, a monomer emulsified liquid obtained by (i) adding 1.6 parts of sodium lauryl sulfate, which was an emulsifying agent, 0.6 parts of polyoxyethylene polyoxypropylene lauryl ether (manufactured by DKS Co. Ltd., NOIGEN LP-180), which was an emulsifying agent, and 55 parts by weight of deionized water to 40 parts by weight of a monomer mixture shown in (b1) and (b2) in HB-26 in Table 12 and (ii) emulsifying these components was uniformly and continuously added over 120 minutes. After the addition of the monomer emulsified liquid was finished, postpolymerization was carried out for 60 minutes. Subsequently, a temperature was decreased to 70°C. Thereafter, 0.002 parts of t-butyl hydroperoxide and 0.0075 parts of Bruggolite (registered trademark) FF-6 were added, stirring was carried out for 30 minutes, and after-treatment was carried out. Thereafter, when a reaction mixture was cooled to not higher than 40°C and neutralization was carried out with use of ammonia, a rapid increase in viscosity occurred, so that stirring became impossible. Therefore, the reaction mixture was diluted with deionized water so that a solid content became 25%. In this manner, a composite resin particle latex 22 (HB-26) which could be stirred and mixed was obtained.

Table 12 shows the latex properties (average particle diameter, particle size distribution, viscosity, MFT, THF-insoluble content, storage stability, and water absorption) of the obtained composite resin particle latex HB-25. Note that it was impossible to evaluate a coating film because the solid content was low and also the viscosity was high and therefore it was difficult to prepare a paint.

In Example 22, (C) a reactive surfactant was not used in any of the steps 1 and 2. As a polymerization initiator in the step 2, the redox polymerization initiator obtained by combining an organic peroxide and a reducing agent was used. The obtained latex had no problem with storage stability, and also had no problem with a water absorption, which was not more than 8%.

In Example 23, a part of the emulsifying agent used in the step 1 of the production method in Example 22 was replaced with the (C) reactive surfactant. The water absorption, glossiness, and water whitening resistance of the coating film obtained from the composite resin particle latex obtained in Example 23 were enhanced as compared with the coating film obtained from the composite resin particle latex obtained in Example 22.

In Example 24, the emulsifying agent used in the step 2 of the production method in Example 23 was also replaced with the (C) reactive surfactant. The water absorption, glossiness, and water whitening resistance of the coating film obtained from the composite resin particle latex obtained in Example 24 were further enhanced as compared with the coating film obtained from the composite resin particle latex obtained in Example 23, and haze disappeared in the appearance of the coating film obtained from the composite resin particle latex obtained in Example 24.

In Comparative Example 4, since the amount of the monomer having a carboxyl group was excessively large, a rapid increase in viscosity occurred after the neutralization, and therefore a latex that could be formed into a paint was not obtained.

[Table 12]

| Step | | | Raw material | | Example 22 | Example 23 | Example 24 | Comparative Example 4 |
|---|---|---|---|---|---|---|---|---|
| | | | | | HB-22 | HB-23 | HB-24 | HB-25 |
| Step 1 | (A) | (a1) | VCM | (part) | 43.50 | 43.50 | 43.50 | 60.00 |
| | | (a2) | 2EHA | (part) | - | - | - | - |
| | | Total of (a1)+(a2) monomers | | (part) | 43.50 | 43.50 | 43.50 | 60.00 |
| | | (E) | TAC | (part) | - | - | - | - |
| | | (C) Reactive | SR-1025 | (part) | - | 0.78 | 0.78 | - |
| | | Nonreactive | SLS | (part) | 0.90 | 0.35 | 0.35 | 1.24 |
| | | | LP-180 | (part) | 0.50 | 0.50 | 0.50 | - |
| | | Initiator | TBHP | (part) | 0.007 | 0.007 | 0.007 | 0.010 |
| | | Reducing agent | SFS | (part) | 0.046 | 0.046 | 0.046 | 0.064 |
| | | Ppolymerization temperature | | (°C) | 60 | 60 | 60 | 60 |
| Step 2 | (B) | (b1) | MMA | (part) | 5.00 | 5.00 | 5.00 | 7.00 |
| | | | BA | (part) | 30.00 | 30.00 | 30.00 | 21.00 |
| | | | St | (part) | 18.65 | 18.65 | 18.65 | - |
| | | (b2) | MAA | (part) | 1.25 | 1.25 | 1.25 | - |
| | | | AA | (part) | - | - | - | 9.30 |
| | | | HEMA | (part) | 1.60 | 1.60 | 1.60 | 2.35 |
| | | | HAPS | (part) | - | - | - | 0.35 |
| | | Total of (b1)+(b2) monomers | | (part) | 56.50 | 56.50 | 56.50 | 40.00 |
| | | (C) Reactive | AR-1025 | (part) | - | - | 0.85 | - |
| | | | PD-430S | (part) | - | - | 0.85 | - |
| | | Nonreactive | LP-180 | (part) | 0.45 | 0.45 | - | 0.60 |
| | | | SLS | (part) | 0.57 | 0.57 | - | 1.60 |
| | | Initiator | TBHP | (part) | 0.11 | 0.11 | 0.11 | - |
| | | | KPS | (part) | - | - | - | 0.15 |
| | | Reducing agent | FF-6 | (part) | 0.06 | 0.06 | 0.06 | - |
| | | Ppolymerization temperature | | (°C) | 50 | 50 | 50 | 80 |
| Glass transition temperature (°C) | | Step 1 | | | 80 | 80 | 80 | 80 |
| | | Step 2 | | | -1 | -1 | -1 | 0 |
| Hydrophobic monomer having solubility of not more than 5 g/L in water (%)* | | | | | 86 | 86 | 86 | 53 |
| Monomer having carboxyl group (%)** | | | | | 1.25 | 1.25 | 1.25 | 9.30 |

(continued)

| Step | | | Raw material | | Example 22 | Example 23 | Example 24 | Comparative Example 4 |
|---|---|---|---|---|---|---|---|---|
| | | | | | HB-22 | HB-23 | HB-24 | HB-25 |
| Latex properties | | Solid content concentration | (%) | | 44 | 44 | 44 | 25 |
| | | Particle size distribution | | | Single peak | Single peak | Single peak | Single peak |
| | | Average particle diameter | (nm) | | 196 | 107 | 106 | 899 |
| | | Viscosity | (mPa·s) | | 13 | 101 | 115 | 5,680 |
| | | Minimum film forming temperature | (°C) | | 25 | 22 | 24 | less than 5 |
| | | THF-insoluble content | (%) | | 6 | 5 | 8 | 50 |
| | | Storage stability | | | No agglutinate | No agglutinate | No agglutinate | - |
| | | Water absorption | (%) | | 7.8 | 6.4 | 5.0 | 1,318 |
| Coating film properties | | Coating film appearance | | | Had haze | Had haze | No haze | - |
| | | Glossiness | | | 74 | 80 | 91 | - |
| | | Water whiting resistance | ⊿L* | | 24 | 18 | 5 | - |

VCM Vinyl chloride monomer
2EHA 2-ethylhexyl acrylate
TAC Triallyl cyanurate
SR-1025 Reactive surfactant <manufactured by ADEKA CORPORATION, ADEKA REASOAP SR-1025: active ingredient 25%>
SLS Sodium lauryl sulfate
LP-180 Polyoxyethylene polyoxypropylene lauryl ether <manufactured by DKS Co. Ltd., NOIGEN LP-180>
TBHP tert-butylhydroperoxide
SFS Sodium formaldehyde sulfoxylate
MMA Methyl methacrylate
BA Butyl acrylate
St Styrene
MMA Methyl methacrylate
MAA Methacrylic acid
AA Acrylic acid
HEMA 2-hydroxyethyl methacrylate
HAPS Sulfonic acid 3-allyloxy-2-hydroxypropane sodium salt
KPS Potassium persulfate
AR-1025 Reactive surfactant <manufactured by DKS Co. Ltd., Aqualon AR-1025: active ingredient 25%>
PD-430S Reactive surfactant <manufactured by Kao Corporation, LATEMUL PD-430S: active ingredient 25%>
FF-6 Reducing agent <manufactured by Bruggemann Chemical, Bruggolite FF6 M>
* Proportion in all monomers constituting step 2
** Proportion in all monomers (A)+(B) constituting all steps

## Claims

1. A method for producing composite resin particles, comprising the following steps 1 and 2, wherein, in the step 2, a redox polymerization initiator containing a polymerization initiator and a reducing agent is used:

    [step 1]
    a step of obtaining (A) a vinyl chloride-based resin by carrying out emulsion polymerization of a monomer mixture constituted by more than 90 parts by weight and not more than 100 parts by weight of (a1) a vinyl chloride monomer and not less than 0 parts by weight and less than 10 parts by weight of (a2) an ethylenically unsaturated monomer that is copolymerizable with the vinyl chloride monomer [wherein a total amount of (a1) and (a2) is 100 parts by weight]; and

[step 2]

a step of obtaining (B) an acrylic resin by carrying out, in the presence of the (A) vinyl chloride-based resin, emulsion polymerization of a monomer mixture constituted by 50 parts by weight to 100 parts by weight of (b1) a (meth)acrylic acid alkyl ester monomer and 0 parts by weight to 50 parts by weight of (b2) an ethylenically unsaturated monomer that is copolymerizable with (meth)acrylic acid alkyl ester [wherein a total amount of (b1) and (b2) is 100 parts by weight].

2. The method as set forth in claim 1, wherein a weight ratio between the (A) vinyl chloride-based resin and the (B) acrylic resin is 95:5 to 20:80.

3. The method as set forth in claim 1, wherein, when the step 1 and/or the step 2 are/is carried out, (C) a reactive surfactant is used.

4. The method as set forth in claim 1, wherein not less than 60% by weight of the monomer mixture used in the step 2 is a hydrophobic monomer having a solubility of not more than 5 g/L in water.

5. The method as set forth in claim 1, wherein a part or all of the (b2) ethylenically unsaturated monomer used in the step 2 is an ethylenically unsaturated monomer having a carboxyl group, and the ethylenically unsaturated monomer having a carboxyl group is used in an amount of not more than 6% by weight of all monomers (A)+(B) used in the steps 1 and 2.

6. The method as set forth in claim 1, wherein a part or all of the (b2) ethylenically unsaturated monomer used in the step 2 is an ethylenically unsaturated monomer having a carbonyl group derived from a keto group or an aldehyde group.

7. The method as set forth in claim 6, wherein, after the step 2 is finished, (D) a hydrazine derivative having at least two hydrazino groups or at least two semicarbazide groups per molecule is added.

8. The method as set forth in claim 1, wherein, when the step 1 is carried out, (E) a compound having at least two nonconjugated double bonds is used.

9. The method as set forth in claim 1, wherein the redox polymerization initiator is a redox polymerization initiator obtained by combining an organic peroxide and a reducing agent.

10. The method as set forth in claim 1, wherein the redox polymerization initiator is used in the presence of an oxidation-reduction catalyst.

11. Composite resin particles obtained by a method recited in any one of claims 1 through 10.

12. A molded product obtained by molding composite resin particles recited in claim 11.

13. An ink comprising composite resin particles recited in claim 11.

14. A paint comprising composite resin particles recited in claim 11.

## INTERNATIONAL SEARCH REPORT

| International application No. |
|---|
| **PCT/JP2023/008718** |

**A. CLASSIFICATION OF SUBJECT MATTER**

*C08F 259/04*(2006.01)i; *C08F 2/44*(2006.01)i; *C09D 11/00*(2014.01)i; *C09D 151/00*(2006.01)i
FI:  C08F259/04; C08F2/44 C; C09D11/00; C09D151/00

According to International Patent Classification (IPC) or to both national classification and IPC

**B. FIELDS SEARCHED**

Minimum documentation searched (classification system followed by classification symbols)

C08F259/04; C08F2/44; C09D11/00-11/54; C09D151/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-227699 A (KANEKA CORP) 08 October 2009 (2009-10-08) claims, paragraphs [0001]-[0021], [0039]-[0066] | 1-2, 4, 9-12, 14 |
| A | | 3, 5-8, 13 |
| X | JP 11-343428 A (KANEGAFUCHI CHEM IND CO LTD) 14 December 1999 (1999-12-14) claims, paragraphs [0001], [0009]-[0028], [0033]-[0060] | 1-5, 9-12, 14 |
| A | | 6-8, 13 |
| X | WO 1995/014063 A1 (AKZO NOBEL N.V.) 26 May 1995 (1995-05-26) claims, p. 3, line 1 to p. 18, line 26 | 1-2, 4-6, 8-14 |
| A | | 3, 7 |
| X | US 6316107 B1 (PMD GROUP INC.) 13 November 2001 (2001-11-13) claims, column 4, line 22 to column 15, line 40 | 1-2, 4-5, 8-14 |
| A | | 3, 6-7 |
| A | WO 2012/128138 A1 (NISSHIN CHEMICAL INDUSTRY CO., LTD.) 27 September 2012 (2012-09-27) | 1-14 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/008718** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2014/123109 A1 (SEIKO PMC CORPORATION) 14 August 2014 (2014-08-14) | 1-14 |

Form PCT/ISA/210 (second sheet) (January 2015)

EP 4 491 646 A1

**INTERNATIONAL SEARCH REPORT**
Information on patent family members

International application No.

**PCT/JP2023/008718**

| Patent document cited in search report | | | Publication date (day/month/year) | Patent family member(s) | | | Publication date (day/month/year) |
|---|---|---|---|---|---|---|---|
| JP | 2009-227699 | A | 08 October 2009 | (Family: none) | | | |
| JP | 11-343428 | A | 14 December 1999 | (Family: none) | | | |
| WO | 1995/014063 | A1 | 26 May 1995 | FI | 962112 | A | |
| | | | | NO | 962014 | D | |
| | | | | AT | 166897 | E | |
| | | | | ES | 2118532 | T | |
| | | | | AT | 166897 | T | |
| | | | | DK | 729493 | T | |
| | | | | GR | 3027586 | T | |
| US | 6316107 | B1 | 13 November 2001 | US | 2002/0051884 | A1 | |
| | | | | WO | 2000/059969 | A1 | |
| | | | | AU | 4203800 | A | |
| | | | | AT | 234332 | T | |
| | | | | ES | 2193950 | T | |
| | | | | CN | 1352659 | A | |
| | | | | AR | 23408 | A | |
| WO | 2012/128138 | A1 | 27 September 2012 | US | 2013/0331504 | A1 | |
| | | | | EP | 2687550 | A1 | |
| | | | | CN | 103443153 | A | |
| | | | | KR | 10-2014-0012723 | A | |
| | | | | ES | 2743541 | T | |
| WO | 2014/123109 | A1 | 14 August 2014 | US | 2015/0353670 | A1 | |
| | | | | CN | 104968695 | A | |
| | | | | KR | 10-2015-0115801 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020070350 A
- JP 2005206815 A
- JP 49112990 A
- JP 51074081 A
- JP 9012656 A
- CN 112409543
- JP 52022878 A
- JP 8151358 A
- JP 8245878 A

**Non-patent literature cited in the description**

- *CHINA COATINGS*, September 2021, vol. 36 (09), 51-68